(19) Europäisches Patentamt / European Patent Office / Office européen des brevets

(11) **EP 4 734 132 A1**

(12) **EUROPEAN PATENT APPLICATION**
published in accordance with Art. 153(4) EPC

(43) Date of publication:
**29.04.2026 Bulletin 2026/18**

(21) Application number: **24825988.9**

(22) Date of filing: **20.06.2024**

(51) International Patent Classification (IPC):
$H01F\ 1/34^{(2006.01)}$ $\quad C01G\ 49/00^{(2006.01)}$
$C04B\ 35/38^{(2006.01)}$

(52) Cooperative Patent Classification (CPC):
**C01G 49/00; C04B 35/26; H01F 1/34**

(86) International application number:
**PCT/JP2024/022450**

(87) International publication number:
**WO 2024/262587 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 JP 2023102104**

(71) Applicant: **Proterial, Ltd.**
**Tokyo 135-0061 (JP)**

(72) Inventors:
• **MASUMITSU, Hayato**
**Koto-ku, Tokyo 1350061 (JP)**
• **YAMAMOTO, Hiroki**
**Koto-ku, Tokyo 1350061 (JP)**
• **MIYOSHI, Yasuharu**
**Koto-ku, Tokyo 1350061 (JP)**
• **TAKANO, Shuichi**
**Koto-ku, Tokyo 1350061 (JP)**
• **ITOH, Shinroh**
**Koto-ku, Tokyo 1350061 (JP)**

(74) Representative: **Diehl & Partner**
**Patent- und Rechtsanwaltskanzlei mbB**
**Erika-Mann-Straße 9**
**80636 München (DE)**

(54) **MNZN-BASED SOFT FERRITE AND METHOD FOR PRODUCING SAME**

(57) [Problem] To provide MnZn soft ferrite with low core loss over a wide temperature range and its production method.

[Solution] MnZn soft ferrite comprising main components consisting of 54.0-55.5% by mol of Fe (calculated as $Fe_2O_3$), and 3-7% by mol of Zn (calculated as ZnO), the balance being Mn (calculated as MnO), and a sub-component including 0.25-0.7% by mass of Co (calculated as $Co_3O_4$) in outer percentage to 100% by mass in total of the main components (calculated as the oxides), a $ZnO/Fe_2O_3$ molar ratio being 0.0541-0.127, a $Co_3O_4/Fe_2O_3$ ratio being 0.00450-0.0130, and a $(Co_3O_4)^2/ZnO$ ratio being 0.0135-0.112.

EP 4 734 132 A1

**Description**

FIELD OF THE INVENTION

The present invention relates to an MnZn soft ferrite that is suitable for use in magnetic cores of electronic components such as transformers, inductors, reactors, and choke coils of various power supply devices, and in particular, transformers of power supply devices for data servers, and its production method.

BACKGROUND OF THE INVENTION

Magnetic core materials such as soft ferrites used in transformers, etc. generate core loss in power conversion. Such core loss not only reduces power conversion efficiency, but also is converted into heat, acting as a heat source that raises the ambient temperature, potentially damaging the reliability of electronic components.

When used in servers such as industrial network equipment in data centers, etc., there is a strong demand for smaller size and lighter weight through higher frequencies and higher magnetic flux densities to accommodate increasing data speeds and capacities, while also increasing demand for energy conservation. There is also a growing demand for lower semiconductor losses through higher magnetic flux densities. These applications range from generalpurpose servers with frequency bands of several hundred kHz to servers with high-frequency bands of several MHz. For example, when using generalpurpose MnZn soft ferrites in high-frequency bands of 500 kHz or more, the core loss Pcv increases due to increased eddy current loss, resulting in heat generation and reduced efficiency of the devices. Therefore, there is a growing demand for the development of soft ferrites with low core loss Pcv that can accommodate higher frequencies.

WO 2017/164351 A1 (Patent Reference 1) discloses a MnZn ferrite magnetic core comprising 53-56% by mol of Fe (calculated as $Fe_2O_3$), and 3-9% by mol of Zn (calculated as ZnO), the balance being Mn (calculated as MnO), as main components, and 0.05-0.4% by mass of Co (calculated as $Co_3O_4$), 0.003-0.015% by mass of Si (calculated as $SiO_2$), 0.06-0.3% by mass of Ca (calculated as $CaCO_3$), 0-0.1 % by mass of V (calculated as $V_2O_5$), 0.05% by mass or less (not including 0) of Nb (calculated as $Nb_2O_5$), and 0-0.1% by mass of Ta (calculated as $Ta_2O_5$), as sub-components, in outer percentage to 100% by mass in total of the main components (calculated as said oxides), which is used at a frequency of 1 MHz or more and an exciting magnetic flux density of 75 mT or less, wherein the core loss Pcv is less than 1100 $kW/m^3$ at 0-120°C at a frequency of 2 MHz and an exciting magnetic flux density of 50 mT. This MnZn ferrite magnetic core is obtained by a method including a heat treatment step, after sintering, that comprises heating to a temperature that meets the conditions of 200°C or higher and (Tc - 90)°C to (Tc + 100)°C (where Tc is the Curie temperature (°C) calculated from the mole percentages of $Fe_2O_3$ and ZnO contained in the main components of MnZn ferrite), holding for a certain period of time, and then lowering the temperature at a cooling rate of 50°C/hr or less.

However, although the MnZn ferrite described in Patent Document 1 shows a significant reduction in core loss due to the heat treatment step, further reduction in core loss in a high frequency band is required.

JP 2009-227554 A (Patent Document 2) discloses a sintered ferrite body comprising main components consisting of 52-54% by mol of $Fe_2O_3$, 35-42% by mol of MnO, and 6-11% by mol of ZnO (calculated as the oxides, respectively), and sub-components including $1000 \times 10^{-6}$ to $3500 \times 10^{-6}$% by mass of Co (calculated as $Co_3O_4$), $2000 \times 10^{-6}$ to $5000 \times 10^{-6}$% by mass of Ti (calculated as $TiO_2$), $50 \times 10^{-6}$ to $150 \times 10^{-6}$% by mass of Si (calculated as $SiO_2$), $300 \times 10^{-6}$ to $1500 \times 10^{-6}$% by mass of Ca (calculated as $CaCO_3$), per 1% by mass in total of the oxides of the main components, wherein in a magnetic field having an exciting magnetic flux density of 200 mT and a frequency of 100 kHz, the temperature at which power loss shows a minimum value is higher than 120°C, and the power loss at the temperature showing the minimum value is 350 $kW/m^3$ or less. Patent Document 2 describes that magnetic cores made of this sintered ferrite body can sufficiently reduce the amount of heat generated and sufficiently prevent thermal runaway even under high-temperature conditions of around 100°C or higher. However, the sintered ferrite body described in Patent Document 2 has the problem of large core loss in a high frequency band.

WO 2016/032001 A1 (Patent Document 3) discloses a MnZn ferrite comprising Fe, Mn and Zn as main components, and Si, Ca, Co and Bi, at least one of Ta and Nb, and at least one of Ti and Sn as sub-components, wherein, assumed that the total of the main components composed of $Fe_2O_3$, ZnO, and MnO is 100% by mol, the Fe content is 53.25-54.00% by mol calculated as $Fe_2O_3$, the Zn content is 2.50-8.50% by mol calculated as ZnO, and the balance is Mn calculated as MnO, the Si content is more than 0.001% by mass and less than 0.02% by mass calculated as $SiO_2$, the Ca content is more than 0.04% by mass and less than 0.4% by mass calculated as $CaCO_3$, the Co content is less than 0.5% by mass (not including 0) calculated as $Co_3O_4$, the Bi content is less than 0.05% by mass (not including 0) calculated as $Bi_2O_3$, the Ta content is less than 0.05% by mass (including 0) calculated as $Ta_2O_5$, the Nb content is less than 0.05% by mass (including 0) calculated as $Nb_2O_5$, the Ti content is less than 0.3% by mass (including 0) calculated as $TiO_2$, the Sn content is less than 0.3% by mass (including 0) calculated as $SnO_2$, the total amount of $Ta_2O_5$ and $Nb_2O_5$ is less than 0.05% by mass (not including 0), and the total amount of $TiO_2$ and $SnO_2$ is less than 0.3% by mass (not including 0), and wherein at a frequency of 100 kHz and a maximum magnetic flux density of 200 mT, the core loss (Pcv130A) at 130°C is 400 kW/m$^3$ or less, and a core loss change ratio Ps, which is calculated from the Pcv130A and the core loss (Pcv130B) at 130°C after holding at 200°C for 96 hours using the formula: Ps (%) = [(Pcv130B - Pcv130A)/Pcv130A] x 100, is 5% or less. This MnZn ferrite has suppressed temporal changes in magnetic properties in high-temperature environments, and can suppress increases in core loss, but further reductions in core loss in a high-frequency band are required.

JP 2007-70209 A (Patent Document 4) discloses a method of producing a MnZn ferrite comprising basic components consisting of 51.5-57.0% by mol of $Fe_2O_3$, more than 0 and 15% by mol or less of ZnO, and the balance being essentially MnO, and more than 0 and 5000 ppm or less of Co oxide (calculated as $Co_3O_4$), the method comprising a sintering step including a high-temperature-keeping step and a temperature-lowering step, in which the atmosphere switching temperature $\alpha 1$ (°C) at which the atmosphere under the controlled oxygen partial pressure is switched to a nitrogen atmosphere satisfies the condition of $900 \leq \alpha 1 \leq 1175$, and the cooling speed $\alpha 2$ (°C/hrs) after switching to the nitrogen atmosphere and the $\alpha 1$ satisfy the relationship of $3.8 \leq \alpha 1/\alpha 2 \leq 200$. Patent Document 4 describes that it is possible to provide an MnZn ferrite with small core loss over a wide temperature range. However, the MnZn ferrite of Patent Document 4 has a problem in that it has poor core loss in a high frequency band.

PRIOR ART REFERENCES

Patent Reference 1: WO 2017/164351 A1
Patent Reference 2: JP 2009-227554 A
Patent Reference 3: WO 2016/032001 A1
Patent Reference 4: JP 2007-70209 A

OBJECT OF THE INVENTION

Accordingly, an object of the present invention is to provide MnZn soft ferrite with low core loss in a high frequency band and its production method.

SUMMARY OF THE INVENTION

When a soft ferrite material designed for use at 1 MHz or less is used at, for example, 2 MHz, the residual loss Pr increases, which is thought to be caused by the movement of magnetic domain walls. However, it was found that in order to reduce the residual loss Pr, (a) increasing the resonance frequency of the magnetic domain walls, (b) applying induced magnetic anisotropy Ku, and (c) enhancing the effect of applying induced magnetic anisotropy Ku are effective.

Regarding (a), as the saturated magnetic flux density Bs increases, the magnetic domain wall resonance frequency fr ($\sim Bs/Ku^{1/2}/\mu i^{1/2}$) also increases, and as a result, the movement of magnetic domain walls becomes more likely to follow magnetic field changes. Therefore, it is necessary to select a composition with a high saturated magnetic flux density Bs. It was found that a low Zn content is necessary to achieve a composition with a high Bs. Regarding (b), it was found that heat treatment after sintering rearranges $Co^{2+}$, stabilizing the direction of a magnetic domain and applying induced magnetic anisotropy Ku. The application of induced magnetic anisotropy Ku increases the resonance frequency of the magnetic domain walls. Furthermore, by performing slow cooling during the cooling process of the temperature-lowering part of sintering without heat treatment, the same effect as heat treatment can be obtained. Regarding (c), it was found that increasing the amount of $Co_3O_4$ added increases the amount of $Co^{2+}$, thereby promoting the effect of applying induced magnetic anisotropy. Also, increasing the oxygen concentration in the temperature-lowering part (between a keeping temperature and 900°C) of the sintering step generates more cation vacancies in the ferrite, making it easier for $Co^{2+}$ to rearrange, increasing the effect of stabilizing the direction of a magnetic domain, promoting the effect of applying induced magnetic anisotropy Ku, and increasing the resonance frequency of the magnetic domain walls. As described above, (c) enhances the effect of heat treatment after sintering in (b) above.

Of the three above, the effects of (a) and (c) are particularly remarkable. As a result of intensive research into the composition of MnZn soft ferrite focusing on the above points, it was found that simply reducing the Zn content and increasing the amount of $Co_3O_4$ added are not enough to sufficiently reduce the residual loss Pr in a high frequency band (e.g., 1 to 2 MHz). Therefore, the relationship between the amount of Zn and Co and the main component Fe, and the relationship between the amount of Co and the amount of Zn were also investigated. As a result, it has been found that by increasing or decreasing the amounts of Co and Zn to their respective predetermined values and keeping the molar ratio of $ZnO/Fe_2O_3$, the ratio of $Co_3O_4/Fe_2O_3$, and the ratio of $(Co_3O_4)^2/ZnO$ within predetermined ranges, the residual loss Pr of MnZn soft ferrite in a high frequency band can be significantly reduced. The present invention has been completed based on such findings.

In addition, when soft ferrite designed for low exciting magnetic flux density is used at high exciting magnetic flux density, the hysteresis loss Ph caused by magnetic hysteresis and the eddy current loss Pe caused by Joule heat derived from the current, which is generated in the soft ferrite due to the magnetization change, increase. We believe that in order to reduce the hysteresis loss Ph and eddy current loss Pe, (a) decreasing the crystalline magnetic anisotropy constant $K_1$, (b) increasing the specific resistance of the grain boundary, and (c) increasing the crystal grain size are effective.

Specifically, in order to achieve (a), we adjusted the amount of $Co_3O_4$ added. By adjusting the amount of $Co_3O_4$ added so that the amount of $Co^{2+}$ is such a value that the crystalline magnetic anisotropy constant $K_1$ is close to 0, the initial permeability $\mu i$ increases. As a result, the hysteresis loop area decreases, and Ph decreases. In order to achieve (b), we adjusted the amount of $CaCO_3$, $SiO_2$ and $Nb_2O_5$ added. In order to achieve (c), the high-temperature-keeping temperature in the sintering step was raised. When the crystal grain size increases due to the increase in the high-temperature-keeping temperature, $\mu i$ increases, the hysteresis loop area decreases, and Ph decreases. However, if the high-temperature-keeping temperature is raised too much, coarse grains are generated, and Ph rather increases.

That is, MnZn soft ferrite of the present invention comprises main components consisting of 54.0-55.5% by mol of Fe (calculated as $Fe_2O_3$), and 3-7% by mol of Zn (calculated as ZnO), the balance being Mn (calculated as MnO), and a sub-component including 0.25-0.7% by mass of Co (calculated as $Co_3O_4$) in outer percentage to 100% by mass in total of the main components (calculated as the oxides), a ratio ($ZnO/Fe_2O_3$ molar ratio) of a Zn content (% by mol calculated as ZnO) to a Fe content (% by mol calculated as $Fe_2O_3$) in the main components being 0.0541-0.127, a ratio ($Co_3O_4/Fe_2O_3$ ratio) of a Co content (% by mass calculated as $Co_3O_4$ per 100% by mass in total of the main components) in the sub-component to the Fe content (% by mol calculated as $Fe_2O_3$) in the main components being 0.00450-0.0130, and a ratio [$(Co_3O_4)^2$/ZnO ratio] of a square of the Co content (% by mass calculated as $Co_3O_4$ per 100% by mass in total of the main components) in the sub-component to the Zn content (% by mol calculated as ZnO) in the main components being 0.0135-0.112.

The MnZn soft ferrite of the present invention preferably has a sintered body density of 4.65 $g/cm^3$ or more.

The MnZn soft ferrite of the present invention preferably has an average crystal grain size of 2-5 $\mu m$.

In the MnZn soft ferrite of the present invention, maximum core loss $Pcv_{max}$ at 20-100°C at a frequency of 2 MHz and an exciting magnetic flux density of 75 mT is preferably 3800 $kW/m^3$ or less.

In the MnZn soft ferrite of the present invention, maximum core loss $Pcv_{max}$ at 20-100°C at a frequency of 1 MHz and an exciting magnetic flux density of 100 mT is preferably 3800 $kW/m^3$ or less.

The MnZn soft ferrite of the present invention preferably has initial permeability $\mu i$ of 400 or more.

A first method of the present invention for producing MnZn soft ferrite comprises: a step of molding a raw material powder to obtain a green body; a step of sintering the green body; and a step of heat-treating the resultant sintered body;

the sintering step comprising a high-temperature-keeping step in which the sintering step is performed in an atmosphere having an oxygen concentration of more than 0.05% by volume and 10% by volume or less, and at a temperature of more than 1055°C and 1205°C or less for 1-12 hours,

the heat treatment step including keeping the sintered body at a temperature that meets the conditions of (Tc - 100°C) to (Tc - 10°C) (where Tc is a Curie temperature measured using a method described in JIS C2560-2) for 1 hour or more, and then lowering the temperature from the keeping temperature at a cooling speed of 100-200°C/hr or at a cooling speed of 50°C/hr or less.

A second method of the present invention for producing MnZn soft ferrite comprises: a step of molding a raw material powder to obtain a green body; and a step of sintering the green body;

the sintering step comprising a high-temperature-keeping step in which the sintering step is performed in an atmosphere having an oxygen concentration of more than 0.05% by volume and 10% by volume or less, and at a temperature of more than 1055°C and 1205°C or less for 1-12 hours, wherein a heat treatment is not performed after the sintering step.

EFFECTS OF THE INVENTION

The MnZn soft ferrite of the present invention having the above composition has small core loss in the range of 20 to 100°C at an operating frequency of several hundred kHz to several MHz, for example, 0.5 to 2 MHz, and at an exciting magnetic flux density of several tens of mT or more, for example, 75 mT or more. Therefore, when used for magnetic cores of data server power supply devices, for example, it can contribute to improving power supply efficiency and saving energy.

BRIEF DESCRIPTION OF THE DRAWINGS

Fig. 1 is a graph schematically showing the temperature conditions of a typical sintering step for obtaining the MnZn soft ferrite of the present invention.

FIG. 2 is a graph schematically showing the conditions for using the MnZn soft ferrite of the present invention.

FIG. 3 is a graph schematically showing the conditions for using the MnZn soft ferrite of the present invention.

DESCRIPTION OF THE PREFERRED EMBODIMENTS

Embodiments of the present invention will be specifically explained below. It should be noted, however, that the present invention is not restricted thereto, but modifications may be made properly within the scope of the technical idea of the present invention.

[1] MnZn soft ferrite

(A) Composition

MnZn soft ferrite of the present invention contains main components consisting of Fe, Mn and Zn, and a sub-component including Co. The sub-components may further include Ca and Si. The MnZn soft ferrite of the present invention may further contain Nb as a sub-component. The main components are the elements mainly constituting spinel ferrite, and the sub-components are the elements assisting formation of spinel ferrite. Although Co constitutes spinel ferrite, Co is treated as a sub-component in the present invention because its content is significantly lower than that of the main components.

(1) Main components

(a) Fe: 54.0-55.5% by mol (calculated as $Fe_2O_3$)

When the content of Fe is less than 54.0% by mol or more than 55.5% by mol calculated as $Fe_2O_3$, assuming the total of the main components is 100% by mol, the effect of reducing core loss in a high frequency band is insufficient. The lower limit of the Fe content is preferably 54.3% by mol, more preferably 54.5% by mol. On the other hand, the upper limit of the Fe content is preferably 54.9% by mol, more preferably 54.8% by mol. An example of the range of the Fe content is preferably 54.3-54.9% by mol, more preferably 54.5-54.8% by mol, and the upper (or lower) limit may remain the upper (or lower) limit of the general range, such as 54.3-55.5% by mol. Therefore, the optimal combination of any of the general upper limit, preferred upper limit, and more preferred upper limit and any of the general lower limit, preferred lower limit, and more preferred lower limit is also described in this specification.

(b) Zn: 3-7% by mol (calculated as ZnO)

By reducing the content of Zn to a relatively low level of 3-7% by mol, assuming the total of the main components is 100% by mol, the saturated magnetic flux density Bs of the MnZn soft ferrite increases, enhancing the effect of reducing core loss in the high frequency band. The lower limit of the Zn content is preferably 3.5% by mol, more preferably 4.0% by mol. On the other hand, the upper limit of the Zn content is preferably 6.0% by mol, more preferably 5.0% by mol. An example of the range of the Zn content is preferably 3.5-6.0% by mol, more preferably 4.0-5.0% by mol, and the upper (or lower) limit may remain the upper (or lower) limit of the general range, for example, 3.5-7% by mol. Therefore, the optimal combination of any of the general upper limit, preferred upper limit, and more preferred upper limit and any of the general lower limit, preferred lower limit, and more preferred lower limit is also described in this specification.

(c) Mn: the balance (calculated as MnO)

The content of Mn is the balance obtained by subtracting the content of Fe and the content of Zn from 100% by mol in total of the main components (Fe, Zn and Mn).

(2) Sub-components

The MnZn soft ferrite of the present invention contains Co, Ca, and Si, and optionally contains Nb, as sub-components. Co tends to dissolve in the crystal grains, while Ca, Si, and Nb tend to segregate in grain boundaries. The composition of sub-components is expressed as % by mass per 100% by mass in total of the main components calculated as the oxides.

(a) Co: 0.25-0.7% by mass (calculated as $Co_3O_4$)

Co dissolves easily in the crystal grains, reducing the residual loss Pr. Too little Co content increases the core loss at room temperature. Assuming the total of the main components is 100% by mass, the Co content is 0.25-0.7% by mass calculated as $Co_3O_4$ in outer percentage. The lower limit of the Co content is preferably 0.37% by mass, more preferably 0.4% by mass. On the other hand, the upper limit of the Co content is preferably 0.50% by mass, more preferably 0.45% by mass. An example of the range of the Co content is preferably 0.37-0.50% by mass, more preferably 0.4-0.45% by mass, and the upper (or lower) limit may remain the upper (or lower) limit of the general range, for example, 0.37-0.7% by mass. Therefore, the optimal combination of any of the general upper limit, preferred upper limit, and more preferred upper limit and any of the general lower limit, preferred lower limit, and more preferred lower limit is also described in this specification.

(b) Ca: 0.02-0.30% by mass (calculated as $CaCO_3$)

Ca segregates in the crystal grain boundaries, insulating the crystal grains (increasing grain boundary resistance), reducing the relative loss coefficient $\tan\delta/\mu$ and eddy current loss. As a result, core loss in the high frequency region of MnZn soft ferrite is reduced. When the Ca content is too low, the effect of increasing grain boundary resistance is small. Conversely, when the Ca content is too high, it induces excessive growth of the crystals, deteriorating core loss.
Assuming the total of the main components is 100% by mass, the Ca content is preferably 0.02-0.30% by mass calculated as $CaCO_3$ in outer percentage, so sufficient grain boundary resistance to reduce eddy current loss can be secured, resulting in low loss in the high frequency region. The lower limit of the Ca content is more preferably 0.07% by mass, and most preferably 0.1%. On the other hand, the upper limit of the Ca content is more preferably 0.20% by mass, and most preferably 0.18% by mass. An example of the range of the Ca content is more preferably 0.07-0.20% by mass, and most preferably 0.1-0.18% by mass, and the upper (or lower) limit may remain the upper (or lower) limit of the general range, e.g., 0.07-0.30% by mass. Therefore, the optimal combination of any of the general upper limit, preferred upper limit, and more preferred upper limit and any of the general lower limit, preferred lower limit, and more preferred lower limit is also described in this specification.

(c) Si: 0.002-0.025% by mass (calculated as $SiO_2$)

Si segregates in crystal grain boundaries, insulating the crystal grains (increasing grain boundary resistance), reducing the relative loss coefficient $\tan\delta/\mu$ and eddy current loss. As a result, core loss in the high-frequency region of MnZn soft ferrite is reduced. When the Si content is too low, the effect of increasing grain boundary resistance is small. On the other hand, when the Si content is too high, it induces excessive growth of the crystals, deteriorating core loss.
Assuming the total of the main components is 100% by mol, the Si content is preferably 0.002-0.025% by mass calculated as $SiO_2$ in outer percentage, so sufficient grain boundary resistance to reduce eddy current loss can be secured, providing the MnZn soft ferrite with low loss in the high frequency region. The lower limit of the Si content is more preferably 0.004% by mass, most preferably 0.005% by mass. On the other hand, the upper limit of the Si content is more preferably 0.013% by mass, most preferably 0.01 % by mass. An example of the range of the Si content is more preferably 0.004-0.013% by mass, and most preferably 0.005-0.01% by mass, and the upper (or lower) limit may remain the upper (or lower) limit of the general range, e.g., 0.004-0.025% by mass. Therefore, the optimal combination of any of the general upper limit, preferred upper limit, and more preferred upper limit and any of the general lower limit, preferred lower limit, and more preferred lower limit is also described in this specification.

(d) Nb: 0-0.12% by mass (calculated as $Nb_2O_5$)

Nb, together with Si and Ca, segregates mainly in the crystal grain boundary layer, increasing the grain boundary resistance and contributing to lower loss. Therefore, assuming the total of the main components is 100% by mol, 0.12% by mass or less of Nb calculated as $Nb_2O_5$ may be added in outer percentage. When the Nb content exceeds 0.12% by mass, it induces the excessive growth of the crystal, deteriorating core loss. The upper limit of the Nb content is more preferably 0.06% by mass, and most preferably 0.05% by mass. On the other hand, the lower limit of the Nb content may be 0% by mass (none), but is more preferably 0.01% by mass, most preferably 0.02% by mass, calculated as $Nb_2O_5$. An example of the range of the Nb content is more preferably 0.01-0.06% by mass, and most preferably 0.02-0.05% by mass, and the upper (or lower) limit may remain the upper (or lower) limit of the general range, e.g., 0.01-0.12% by mass. Therefore, the optimal combination of any of the general upper limit, preferred upper limit, and more preferred upper limit and any of the general lower limit, preferred lower limit, and more preferred lower limit is also described in this specification.

(3) Component ratio

(a) $ZnO/Fe_2O_3$ molar ratio

A molar ratio of the Zn content (% by mol calculated as ZnO) to the Fe content (% by mol calculated as $Fe_2O_3$) in the main components is 0.0541-0.127. By increasing the Zn content and keeping the $ZnO/Fe_2O_3$ molar ratio within the above range, the core loss of MnZn soft ferrite can be reduced over a wide temperature range (particularly 20-100°C). When the $ZnO/Fe_2O_3$ molar ratio is less than 0.0541, the temperature change of the core loss is rapid. On the other hand, when the $ZnO/Fe_2O_3$ molar ratio is more than 0.127, the temperature change of the core loss is gradual but the core loss is high. The upper limit of the $ZnO/Fe_2O_3$ molar ratio is preferably 0.1, more preferably 0.09. On the other hand, the lower limit of the $ZnO/Fe_2O_3$ molar ratio is preferably 0.06, more preferably 0.07. An example of the range of the $ZnO/Fe_2O_3$ molar ratio is preferably 0.06-0.1, more preferably 0.07-0.09, and the upper (or lower) limit may remain the upper (or lower) limit of the general range, for example, 0.06-0.127. Therefore, the optimal combination of any of the general upper limit, preferred upper limit, and more preferred upper limit and any of the general lower limit, preferred lower limit, and more preferred lower limit is also described in this specification.

(b) $Co_3O_4/Fe_2O_3$ ratio

A ratio of the Co content (% by mass calculated as $Co_3O_4$ per 100% by mass in total of the main components) in the sub-components to the Fe content (% by mol calculated as $Fe_2O_3$) in the main components is 0.00450-0.0130. When the $Co_3O_4/Fe_2O_3$ ratio is less than 0.00450 or exceeds 0.0130, the core loss at 20°C or lower increases. The upper limit of the $Co_3O_4/Fe_2O_3$ ratio is preferably 0.009, more preferably 0.008. On the other hand, the lower limit of the $Co_3O_4/Fe_2O_3$ ratio is preferably 0.006, more preferably 0.007. An example of the range of the $Co_3O_4/Fe_2O_3$ ratio is preferably 0.006-0.009, more preferably 0.007-0.008, and the upper (or lower) limit may remain the upper (or lower) limit of the general range, for example, 0.006-0.0130. Therefore, the optimal combination of any of the general upper limit, preferred upper limit, and more preferred upper limit and any of the general lower limit, preferred lower limit, and more preferred lower limit is also described in this specification.

(c) $(Co_3O_4)^2/ZnO$ ratio

A ratio of a square of the Co content (% by mass calculated as $Co_3O_4$ per 100% by mass in total of the main components) in the sub-components to the Zn content (% by mol calculated as ZnO) in the main components is 0.0135-0.112. When the $(Co_3O_4)^2/ZnO$ ratio is less than 0.0135 or exceeds 0.112, the core loss at 20°C or lower increases. The upper limit of the $(Co_3O_4)^2/ZnO$ ratio is preferably 0.04, more preferably 0.038. On the other hand, the lower limit of the $(Co_3O_4)^2/ZnO$ ratio is preferably 0.032, more preferably 0.034. An example of the range of the $(Co_3O_4)^2/ZnO$ ratio is preferably 0.032-0.04, more preferably 0.034-0.038, and the upper (or lower) limit may remain the upper (or lower) limit of the general range, e.g., 0.032-0.112. Therefore, the optimal combination of any of the general upper limit, preferred upper limit, and more preferred upper limit and any of the general lower limit, preferred lower limit, and more preferred lower limit is also described in this specification.

(b) Impurities

Raw materials constituting the MnZn soft ferrite may contain sulfur S, chlorine Cl, phosphorus P, boron B, etc. as impurities. Particularly, S generates a compound with Ca and the compound segregates as foreign matter at the grain boundaries, thereby decreasing the volume resistivity ρ and increasing the eddy current loss. It is empirically known that reduction in core loss and improvement in magnetic permeability can be obtained by decreasing these impurities. Therefore, for further reduction of the core loss, it is preferable to be 0.03% by mass or less of S, 0.01% by mass or less of Cl, 0.001% by mass or less of P, and 0.0001% by mass or less of B, in outer percentage to 100% by mass in total of the main components (calculated as the oxides). Furthermore, since the addition of Bi may cause deterioration of the sintering furnace, the Bi content is set to less than 0.01% by mass, preferably 0.001% by mass or less, and more preferably zero, calculated as $Bi_2O_5$.

The quantitative determination of the main components, the sub-components, and the impurities can be conducted by fluorescent X-ray analysis and ICP emission spectral analysis. Qualitative analysis of the contained elements is previously carried out by fluorescent X-ray analysis, and then the contained elements are quantified by a calibration curve method comparing with a standard sample.

(B) Properties

(1) Density of the sintered body

The sintered body of MnZn soft ferrite preferably has a density of 4.65 g/cm or more. When the density of the sintered body is less than 4.65 g/cm, the mechanical strength may be poor and chipping or cracking may occur. The density of the sintered body is more preferably 4.7 g/cm, and further preferably 4.75 g/cm or more. The density of the sintered body can be determined by the method described in the following examples.

(2) Specific resistance $\rho$

In order to reduce the eddy current loss Pe, the specific resistance $\rho$ of the MnZn soft ferrite of the present invention at room temperature is preferably 2 $\Omega \cdot$m or more, and more preferably 3 $\Omega \cdot$m or more.

(3) Initial permeability $\mu$i

The initial permeability $\mu$i is a magnetic permeability calculated by the following equation (1) when the magnetic field strength approaches 0:

$$\mu_i = \lim_{H \to 0} \mu_a \qquad (1)$$

(where $\mu$a represents an amplitude permeability, and H represents a magnetic field strength.). The initial permeability $\mu$i of the MnZn soft ferrite of the present invention at 100 kHz and 0.4 A/m is preferably 400 or more, more preferably 450 or more.

(4) Relative loss coefficient $\tan\delta/\mu$

The relative loss coefficient $\tan\delta/\mu$ of the MnZn soft ferrite of the present invention is preferably 2.5 or less, and more preferably 2 or less.

(5) Core loss Pcv

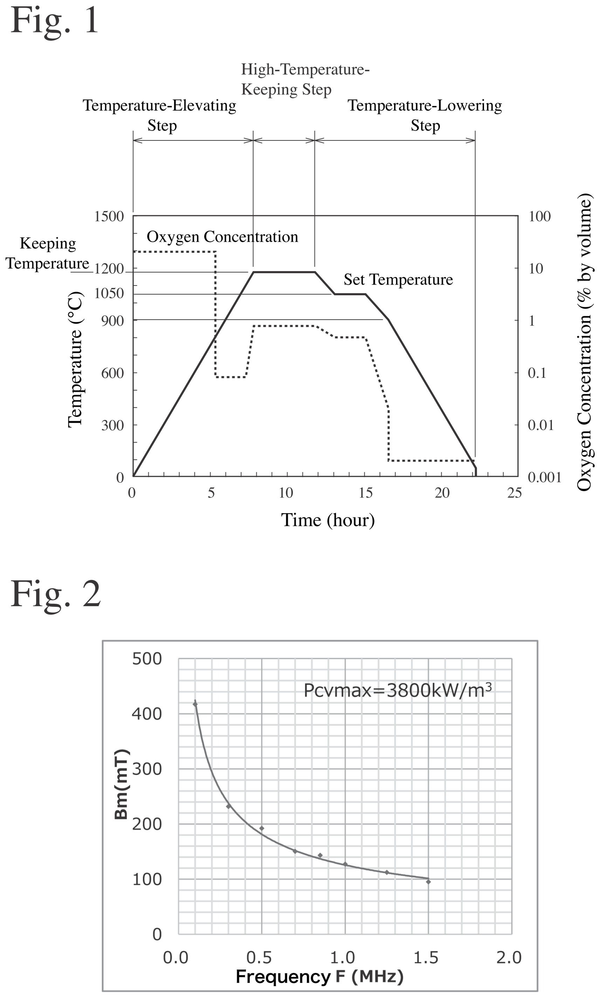

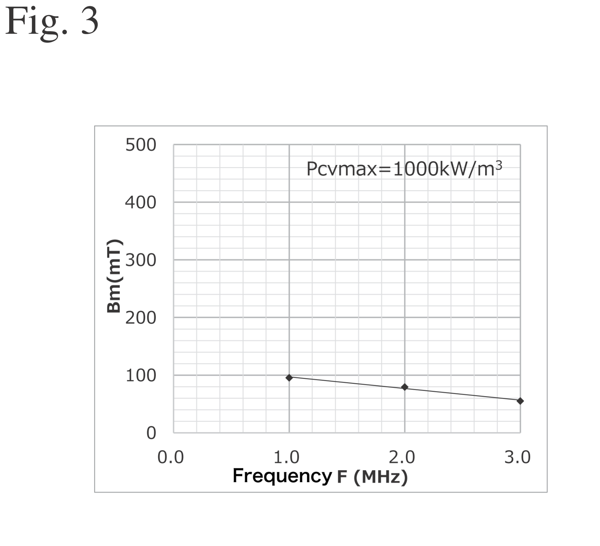

The MnZn soft ferrite of the present invention preferably has a maximum core loss $Pcv_{max}$ of 3800 kW/m$^3$ or less, more preferably 2000 kW/m$^3$ or less, and most preferably 1500 kW/m$^3$ or less at 20-100°C at a frequency of 2 MHz and an exciting magnetic flux density of 75 mT. In addition, the MnZn soft ferrite of the present invention preferably has a maximum core loss $Pcv_{max}$ of 3800 kW/m$^3$ or less, and more preferably 2000 kW/m$^3$ or less at 20-100°C at a frequency of 1 MHz and an exciting magnetic flux density of 100 mT. It is noted that the above frequencies and exciting magnetic flux densities are merely examples, and the MnZn soft ferrite of the present invention is not limited to use at these frequencies and exciting magnetic flux densities. Fig. 2 shows an example of the relationship between an exciting magnetic flux density Bm and a frequency f when $Pcv_{max}$ = 3800 kW/m$^3$, and Fig. 3 shows an example of the relationship between an exciting magnetic flux density Bm and a frequency f when $Pcv_{max}$ = 1000 kW/m$^3$. As shown in Figs. 2 and 3, the combination of the frequency f and the exciting magnetic flux density Bm can be selected depending on the design value of $Pcv_{max}$. The desired value of $Pcv_{max}$ can be obtained even at a frequency lower than 1 MHz or an exciting magnetic flux density higher than 100 mT.

[2] Production method of MnZn soft ferrite

Fig. 1 shows an example of the temperature conditions of the sintering step to obtain the MnZn soft ferrite of the present invention. The sintering step includes a temperature-elevating step, a high-temperature-keeping step, and a temperature-lowering step, and a heat treatment step is carried out after the sintering step as needed. By adjusting the oxygen partial pressure in the sintering step, Ca, Si, Nb, etc. are segregated in the grain boundaries, and the dissolution of Co in the crystal grains is controlled, reducing core loss. In addition, when reducing core loss at high exciting magnetic flux densities (for example, 100 mT or more), the heat treatment step does not need to be performed.

(A) Temperature-elevating step

The average temperature-elevating speed in the temperature-elevating step from room temperature to a keeping temperature is preferably within the range of 50-200°C/hr.

(B) High-temperature-keeping step

The high-temperature-keeping step is preferably carried out at a temperature of 1055-1205°C. The oxygen concentration in the atmosphere during the high-temperature-keeping step is preferably adjusted to 0.05-10% by volume. The high-temperature-keeping step is generally carried out for 1-12 hours.

(C) Temperature-lowering step

When the oxygen concentration is too high in the temperature-lowering step, oxidation of the sintered body proceeds to precipitate hematite from spinel. On the other hand, when the oxygen concentration is too low, wustite precipitates, resulting in crystal distortion, thereby core loss increases. It is preferable to control the oxygen concentration in the temperature-lowering step so that hematite and wustite does not precipitate. Specifically, it is preferable to control the oxygen concentration in the temperature-lowering step so that the oxygen concentration $P_{O2}$ (volume fraction) and the temperature T (°C) meet the following formula (2):

$$\text{Log } P_{O2} = a - b/(T + 273) \ldots (2)$$

,wherein a is a constant of 3.1-12.8 and b is a constant of 6000-20000. a is defined from the temperature and the oxygen concentration in the high-temperature-keeping step. When b is less than 6000, the oxygen concentration is high even if the temperature drops, and oxidation proceeds, thereby hematite may be precipitated from spinel. On the other hand, when b is larger than 20000, the oxygen concentration decreases to precipitate wustite, and both the crystal grain and the grain boundary layer are not sufficiently oxidized, and the resistance is reduced. a is more preferably 6.4-11.5, and b is more preferably 10000-18000.

In the temperature-lowering step, the cooling speed is preferably 100°C/hr from the keeping temperature to 900°C, and 150°C/hr below 900°C. In the temperature-lowering step, the oxygen concentration at 1050°C is preferably 0.1-1.0% by volume. In the temperature-lowering step, the oxygen concentration (% by volume) is preferably adjusted to achieve equilibrium oxygen partial pressure up to 900°C. After 900°C, cooling is preferably performed in a stream of $N_2$, reducing the final oxygen concentration to approximately 0.002% by volume.

By combining the appropriate main component composition, sub-component composition and production method, it is possible to achieve the lowest maximum core loss $Pcv_{max}$ at 20-100°C for each composition. For example, when MnZn soft ferrite with a composition of 54.7-54.8% by mol of Fe (calculated as $Fe_2O_3$), 4.3-4.4% by mol of Zn (calculated as ZnO), 0.4-0.45% by mass of Co (calculated as $Co_3O_4$), 0.02-0.04% by mass of Ca (calculated as $CaCO_3$), 0.05-0.01% by mass of Si (calculated as $SiO_2$), 0.08-0.09 of the $ZnO/Fe_2O_3$ molar ratio, 0.073-0.074 of the $Co_3O_4/Fe_2O_3$ ratio, and 0.036-0.038 of the $(Co_3O_4)^2/ZnO$ ratio is sintered under the conditions that a temperature in the high-temperature-keeping step of the sintering step is 1175°C, an oxygen concentration in the atmosphere in the high-temperature-keeping step is 2% by volume, the oxygen concentration $PO_2$ in the temperature-lowering step is expressed by the formula $logPo_2 = a-b/(T+273)$ (where T is temperature (°C), a = 9-10, and b = 13120-13130), and the oxygen concentration at 1050°C is 0.3% by volume, the maximum core loss $Pcv_{max}$ at 20-100°C at 1 MHz and 100 mT can be reduced to a low value of 2000 kW/m³ or less, as in Example 55. Preferably, the maximum core loss $Pcv_{max}$ at 20-100°C at 1 MHz and 100 mT can be reduced to 1900 kW/m³ or less. More preferably, the maximum core loss $Pcv_{max}$ at 20-100°C at 1 MHz and 100 mT can be reduced to 1800 kW/m³ or less.

(D) Heat treatment step

When the exciting magnetic flux density is set to 100 mT or less, especially 75 mT or less, the core loss can be reduced by heat-treating the obtained sintered body of MnZn soft ferrite at a temperature of (Tc - 100°C) to (Tc - 10°C) for 1 hour or more. Cooling after heat treatment is preferably carried out at a speed of 100-200°C/hr or 50°C/hr or less, where Tc is the Curie temperature measured according to the method described in JIS C2560-2. When the exciting magnetic flux density Bm is low, for example, 100 mT or less, heat treatment reduces core loss. On the other hand, when the exciting magnetic flux density Bm is high, for example, 100 mT or more, heat treatment does not reduce core loss, so heat treatment is not necessarily required.

The present invention will be explained in further detail by Examples below, without intention of restriction.

Examples 1-40 and Comparative Examples 1 and 2

$Fe_2O_3$ powder, ZnO powder, and $Mn_3O_4$ powder as the main components were wet mixed in the proportions shown in Table 1, then dried, and calcined for 1.5 hours at 860°C. It is noted that the amount of $Mn_3O_4$ powder added is

represented in that calculated as MnO in Table 1. 100% by mass of each obtained calcined powder was added with $Co_3O_4$ powder, $CaCO_3$ powder, $SiO_2$ powder, and $Nb_2O_5$ powder in the proportions shown in Table 1 in a ball mill to be pulverized and mixed. The average pulverized particle size of each mixture was measured by an air permeability method, and the results are shown in Table 2. With polyvinyl alcohol added as a binder, each mixture was granulated in a mortar, and compression-molded to a ring-shaped green body.

Each green body was sintered using a method consisting of a temperature-elevating step in which temperature was elevated from room temperature to the keeping temperature shown in Table 2, a high-temperature-keeping step in which it was held at the keeping temperature for 1-5 hours at an oxygen concentration of 0.86% by volume, and a temperature-lowering step in which it was cooled from the keeping temperature to room temperature. The oxygen concentration in the sintering atmosphere during the temperature-elevating step was 18% by volume from room temperature to 800°C, and 0.1-18% by volume after reaching 800°C. In the temperature-lowering step, the oxygen concentration was set to 0.1-1.0% by volume at 1050°C, and was reduced to approximately 0.0024% by volume after 900°C. Each of the obtained sintered MnZn soft ferrite bodies was subjected to heat treatment at 200°C for 96 hours and then quenched at a rate of 150°C/hr. Thus, annular MnZn soft ferrite magnetic cores having an outer diameter of 8 mm, an inner diameter of 4 mm and a thickness of 2.1 mm were obtained.

The density, specific resistance ρ, initial permeability $\mu i$, relative loss coefficient tanδ/μ, and core loss Pcv of each MnZn soft ferrite magnetic core was measured by the following method.

(1) Density of sintered body

The density was calculated by a volume-weight method from the dimensions and weight of each MnZn soft ferrite magnetic core. The results are shown in Table 3.

(2) Specific resistance ρ

A plate-like sample was cut out from each MnZn soft ferrite magnetic core, silver paste electrodes were provided on the two opposing surfaces of the plate-like sample, and the electrical resistance R (Ω) was measured using a milliohm high tester 3224 manufactured by HIOKI E.E. CORPORATION. The specific resistance ρ (Ω·m) was calculated from the area A ($m^2$) of the surface on which the electrode formed and the thickness t (m) by the following formula (2). The results are shown in Table 3.

$$\rho \ (\Omega \cdot m) = R \ x \ (A/t) \ \ldots (2)$$

(3) Initial permeability μi

The initial permeability μi of each MnZn soft ferrite magnetic core with 7-turn winding was measured at 23°C and 100 kHz in a magnetic field of 0.4 A/m by HP-4285A available from Hewlett-Packard. The results are shown in Table 3.

(4) Relative loss coefficient tanδ/μ

The loss coefficient tanδ and magnetic permeability μ of each MnZn soft ferrite magnetic core with 7-turn winding were measured at 23°C and 100 kHz in a magnetic field of 0.4 A/m by HP-4285A available from Hewlett-Packard to obtain tanδ/μ. The results are shown in Table 3.

(5) Average crystal grain size

The grain boundaries on the mirror polished surface of each sintered MnZn ferrite body were thermally etched (at 950-1050°C and for 1 hr in $N_2$), and then taken a micrograph by a scanning electron microscope (1000 times). The average crystal grain size was calculated as an equivalent circle diameter by quadrature method in a square region of 75 μm x 75 μm in the photograph. The results are shown in Table 3.

(6) Core loss Pcv

Each MnZn soft ferrite magnetic core was wound with three turns of primary winding and secondary winding, and the core loss Pcv of the magnetic core was measured at -30°C, -15°C, 0°C, 20°C, 40°C, 60°C, 80°C, 100°C, 120°C, 140°C, and 150°C using a B-H analyzer (SY-8218) available from Iwatsu Electric Co., Ltd., at a frequency of 2 MHz and an exciting magnetic flux density of 75 mT. The results are shown in Table 4.

Table 1-1

| Sample No. | Composition | | | | | | |
|---|---|---|---|---|---|---|---|
| | Main Components (% by mol) | | | Sub-Components (% by mass)[1] | | | |
| | MnO | $Fe_2O_3$ | ZnO | $Co_3O_4$ | $CaCO_3$ | $SiO_2$ | $Nb_2O_5$ |
| Example 1 | 40.91 | 54.73 | 4.36 | 0.30 | 0.1 | 0.005 | 0 |
| Example 2 | 40.92 | 54.72 | 4.35 | 0.35 | 0.1 | 0.005 | 0 |
| Example 3 | 40.93 | 54.70 | 4.36 | 0.40 | 0.1 | 0.005 | 0 |
| Example 4 | 40.96 | 54.69 | 4.35 | 0.45 | 0.1 | 0.005 | 0 |
| Example 5 | 40.97 | 54.69 | 4.35 | 0.50 | 0.1 | 0.005 | 0 |
| Comp. Ex. 1 | 40.91 | 54.73 | 4.36 | 0 | 0.1 | 0.005 | 0 |
| Comp. Ex. 2 | 40.91 | 54.73 | 4.36 | 0.10 | 0.1 | 0.005 | 0 |
| Example 6 | 40.91 | 54.72 | 4.37 | 0.25 | 0.1 | 0.005 | 0 |
| Example 7 | 41.26 | 54.39 | 4.35 | 0.35 | 0.1 | 0.005 | 0 |
| Example 8 | 41.30 | 54.35 | 4.35 | 0.40 | 0.1 | 0.005 | 0 |
| Example 9 | 41.33 | 54.31 | 4.36 | 0.45 | 0.1 | 0.005 | 0 |
| Example 10 | 41.31 | 54.35 | 4.34 | 0.50 | 0.1 | 0.005 | 0 |
| Example 11 | 41.31 | 54.34 | 4.35 | 0.55 | 0.1 | 0.005 | 0 |
| Example 12 | 41.55 | 54.08 | 4.37 | 0.35 | 0.1 | 0.005 | 0 |
| Example 13 | 41.56 | 54.06 | 4.38 | 0.40 | 0.1 | 0.005 | 0 |
| Example 14 | 41.58 | 54.06 | 4.37 | 0.45 | 0.1 | 0.005 | 0 |
| Example 15 | 41.56 | 54.07 | 4.37 | 0.50 | 0.1 | 0.005 | 0 |
| Example 16 | 41.53 | 54.11 | 4.37 | 0.55 | 0.1 | 0.005 | 0 |
| Example 17 | 41.54 | 54.10 | 4.36 | 0.60 | 0.1 | 0.005 | 0 |
| Example 18 | 41.59 | 54.04 | 4.37 | 0.70 | 0.1 | 0.005 | 0 |
| Example 19 | 40.92 | 54.72 | 4.35 | 0.35 | 0.1 | 0.005 | 0 |
| Note: (1) Proportion (% by mass) to 100% by mass of the main components. | | | | | | | |

Table 1-2

| Sample No. | Composition | | | | | | |
|---|---|---|---|---|---|---|---|
| | Main Components (% by mol) | | | Sub-Components (% by mass)[2] | | | |
| | MnO | $Fe_2O_3$ | ZnO | $Co_3O_4$ | $CaCO_3$ | $SiO_2$ | $Nb_2O_5$ |
| Example 20 | 40.93 | 54.70 | 4.36 | 0.40 | 0.10 | 0.005 | 0 |
| Example 21 | 40.96 | 54.69 | 4.35 | 0.45 | 0.10 | 0.005 | 0 |
| Example 22 | 40.97 | 54.69 | 4.35 | 0.50 | 0.10 | 0.005 | 0 |
| Example 23 | 41.26 | 54.39 | 4.35 | 0.35 | 0.10 | 0.005 | 0 |
| Example 24 | 41.30 | 54.35 | 4.35 | 0.40 | 0.10 | 0.005 | 0 |
| Example 25 | 41.33 | 54.31 | 4.36 | 0.45 | 0.10 | 0.005 | 0 |
| Example 26 | 41.31 | 54.35 | 4.34 | 0.50 | 0.10 | 0.005 | 0 |
| Example 27 | 40.90 | 54.74 | 4.36 | 0.40 | 0.10 | 0.005 | 0 |
| Example 28 | 40.92 | 54.71 | 4.37 | 0.40 | 0.10 | 0.010 | 0 |
| Example 29 | 40.90 | 54.73 | 4.37 | 0.40 | 0.18 | 0.005 | 0 |

(continued)

| Sample No. | Composition | | | | | | |
|---|---|---|---|---|---|---|---|
| | Main Components (% by mol) | | | Sub-Components (% by mass)[2] | | | |
| | MnO | Fe$_2$O$_3$ | ZnO | Co$_3$O$_4$ | CaCO$_3$ | SiO$_2$ | Nb$_2$O$_5$ |
| Example 30 | 40.89 | 54.74 | 4.37 | 0.40 | 0.10 | 0.005 | 0.02 |
| Example 31 | 40.89 | 54.73 | 4.38 | 0.40 | 0.10 | 0.010 | 0.02 |
| Example 32 | 40.90 | 54.72 | 4.37 | 0.40 | 0.18 | 0.005 | 0.02 |
| Example 33 | 40.90 | 54.74 | 4.36 | 0.40 | 0.26 | 0.005 | 0.02 |
| Example 34 | 40.90 | 54.73 | 4.37 | 0.40 | 0.26 | 0.010 | 0.02 |
| Example 35 | 40.88 | 54.75 | 4.37 | 0.40 | 0.10 | 0.005 | 0.04 |
| Example 36 | 40.90 | 54.71 | 4.39 | 0.40 | 0.10 | 0.010 | 0.04 |
| Example 37 | 40.89 | 54.74 | 4.37 | 0.40 | 0.10 | 0.015 | 0.04 |
| Example 38 | 40.89 | 54.74 | 4.37 | 0.40 | 0.18 | 0.005 | 0.04 |
| Example 39 | 40.89 | 54.73 | 4.37 | 0.40 | 0.18 | 0.010 | 0.04 |
| Example 40 | 40.91 | 54.72 | 4.37 | 0.40 | 0.18 | 0.015 | 0.04 |
| Note: (1) Proportion (% by mass) to 100% by mass of the main components. | | | | | | | |

Table 1-3

| Sample No. | ZnO/Fe$_2$O$_3$ Molar Ratio | Co$_3$O$_4$/Fe$_2$O$_3$ Ratio[3] | (Co$_3$O$_4$)$^2$/ZnO Ratio[4] |
|---|---|---|---|
| Example 1 | 0.080 | 0.0055 | 0.0206 |
| Example 2 | 0.080 | 0.0064 | 0.0281 |
| Example 3 | 0.080 | 0.0073 | 0.0367 |
| Example 4 | 0.079 | 0.0082 | 0.0466 |
| Example 5 | 0.080 | 0.0091 | 0.0575 |
| Comp. Ex. 1 | 0.080 | 0 | 0 |
| Comp. Ex. 2 | 0.080 | 0.0018 | 0.0023 |
| Example 6 | 0.080 | 0.0046 | 0.0143 |
| Example 7 | 0.080 | 0.0064 | 0.0282 |
| Example 8 | 0.080 | 0.0074 | 0.0368 |
| Example 9 | 0.080 | 0.0083 | 0.0464 |
| Example 10 | 0.080 | 0.0092 | 0.0576 |
| Example 11 | 0.080 | 0.0101 | 0.0696 |
| Example 12 | 0.081 | 0.0065 | 0.0281 |
| Example 13 | 0.081 | 0.0074 | 0.0366 |
| Example 14 | 0.081 | 0.0083 | 0.0464 |
| Example 15 | 0.081 | 0.0092 | 0.0572 |
| Example 16 | 0.081 | 0.0102 | 0.0693 |
| Example 17 | 0.081 | 0.0111 | 0.0825 |
| Example 18 | 0.081 | 0.0129 | 0.1120 |

(continued)

| Sample No. | ZnO/Fe₂O₃ Molar Ratio | Co₃O₄/Fe₂O₃ Ratio[3] | (Co₃O₄)²/ZnO Ratio[4] |
|---|---|---|---|
| Example 19 | 0.080 | 0.0064 | 0.0281 |

Note: (3) Ratio of $Co_3O_4$ (% by mass) to $Fe_2O_3$ (% by mol).
(4) Ratio of a square of $Co_3O_4$ (% by mass) to ZnO (% by mol).

Table 1-4

| Sample No. | ZnO/Fe₂O₃ Molar Ratio | Co₃O₄/Fe₂O₃ Ratio[5] | (Co₃O₄)²/ZnO Ratio[6] |
|---|---|---|---|
| Example 20 | 0.080 | 0.0073 | 0.0367 |
| Example 21 | 0.079 | 0.0082 | 0.0466 |
| Example 22 | 0.080 | 0.0091 | 0.0575 |
| Example 23 | 0.080 | 0.0064 | 0.2820 |
| Example 24 | 0.080 | 0.0074 | 0.0368 |
| Example 25 | 0.080 | 0.0083 | 0.0464 |
| Example 26 | 0.080 | 0.0092 | 0.0576 |
| Example 27 | 0.080 | 0.0073 | 0.0367 |
| Example 28 | 0.080 | 0.0073 | 0.0366 |
| Example 29 | 0.080 | 0.0073 | 0.0366 |
| Example 30 | 0.080 | 0.0073 | 0.0366 |
| Example 31 | 0.080 | 0.0073 | 0.0365 |
| Example 32 | 0.080 | 0.0073 | 0.0366 |
| Example 33 | 0.080 | 0.0073 | 0.0367 |
| Example 34 | 0.080 | 0.0073 | 0.0366 |
| Example 35 | 0.080 | 0.0073 | 0.0366 |
| Example 36 | 0.080 | 0.0073 | 0.0365 |
| Example 37 | 0.080 | 0.0073 | 0.0366 |
| Example 38 | 0.080 | 0.0073 | 0.0367 |
| Example 39 | 0.080 | 0.0073 | 0.0366 |
| Example 40 | 0.080 | 0.0073 | 0.0366 |

Note: (5) Ratio of $Co_3O_4$ (% by mass) to $Fe_2O_3$ (% by mol).
(6) Ratio of a square of $Co_3O_4$ (% by mass) to ZnO (% by mol).

Table 2-1

| Sample No. | Production Conditions | | | |
|---|---|---|---|---|
| | Pulverized Particle Size (μm) | Keeping Temperature (°C) | Oxygen Concentration (% by volume) | |
| | | | Keeping Step | Temperature-Lowering Step[7] |
| Example 1 | 1.00 | 1175 | 0.86 | 0.53 |
| Example 2 | 1.005 | 1175 | 0.86 | 0.53 |
| Example 3 | 1.01 | 1175 | 0.86 | 0.53 |
| Example 4 | 1.005 | 1175 | 0.86 | 0.53 |
| Example 5 | 1.00 | 1175 | 0.86 | 0.53 |

(continued)

| Sample No. | Production Conditions | | | |
| --- | --- | --- | --- | --- |
| | Pulverized Particle Size (μm) | Keeping Temperature (°C) | Oxygen Concentration (% by volume) | |
| | | | Keeping Step | Temperature-Lowering Step[7] |
| Comp. Ex. 1 | 1.01 | 1175 | 0.86 | 0.53 |
| Comp. Ex. 2 | 1.01 | 1175 | 0.86 | 0.53 |
| Example 6 | 1.01 | 1175 | 0.86 | 0.53 |
| Example 7 | 1.03 | 1175 | 0.86 | 0.31 |
| Example 8 | 1.03 | 1175 | 0.86 | 0.31 |
| Example 9 | 1.02 | 1175 | 0.86 | 0.31 |
| Example 10 | 1.04 | 1175 | 0.86 | 0.31 |
| Example 11 | 1.02 | 1175 | 0.86 | 0.31 |
| Example 12 | 1.02 | 1175 | 0.86 | 0.15 |
| Example 13 | 1.01 | 1175 | 0.86 | 0.15 |
| Example 14 | 1.00 | 1175 | 0.86 | 0.15 |
| Example 15 | 1.02 | 1175 | 0.86 | 0.15 |
| Example 16 | 1.01 | 1175 | 0.86 | 0.15 |
| Example 17 | 1.00 | 1175 | 0.86 | 0.15 |
| Example 18 | 1.02 | 1175 | 0.86 | 0.15 |
| Example 19 | 1.01 | 1205 | 0.86 | 0.53 |

Note: (7) Measured at 1050°C.

Table 2-2

| Sample No. | Production Conditions | | | |
| --- | --- | --- | --- | --- |
| | Pulverized Particle Size (μm) | Keeping Temperature (°C) | Oxygen Concentration (% by volume) | |
| | | | Keeping Step | Temperature-Lowering Step [8] |
| Example 20 | 1.01 | 1205 | 0.86 | 0.53 |
| Example 21 | 1.01 | 1205 | 0.86 | 0.53 |
| Example 22 | 1.00 | 1205 | 0.86 | 0.53 |
| Example 23 | 1.03 | 1145 | 0.86 | 0.53 |
| Example 24 | 1.03 | 1145 | 0.86 | 0.53 |
| Example 25 | 1.02 | 1145 | 0.86 | 0.53 |
| Example 26 | 1.04 | 1145 | 0.86 | 0.53 |
| Example 27 | 1.04 | 1115 | 0.86 | 0.53 |
| Example 28 | 1.04 | 1115 | 0.86 | 0.53 |
| Example 29 | 1.02 | 1115 | 0.86 | 0.53 |
| Example 30 | 1.05 | 1145 | 0.86 | 0.53 |
| Example 31 | 1.03 | 1145 | 0.86 | 0.53 |
| Example 32 | 1.02 | 1145 | 0.86 | 0.53 |
| Example 33 | 1.03 | 1145 | 0.86 | 0.53 |

(continued)

| Sample No. | Production Conditions | | | |
|---|---|---|---|---|
| | Pulverized Particle Size (μm) | Keeping Temperature (°C) | Oxygen Concentration (% by volume) | |
| | | | Keeping Step | Temperature-Lowering Step [8] |
| Example 34 | 1.05 | 1145 | 0.86 | 0.53 |
| Example 35 | 1.05 | 1085 | 0.86 | 0.53 |
| Example 36 | 1.04 | 1085 | 0.86 | 0.53 |
| Example 37 | 1.03 | 1085 | 0.86 | 0.53 |
| Example 38 | 1.03 | 1085 | 0.86 | 0.53 |
| Example 39 | 1.04 | 1085 | 0.86 | 0.53 |
| Example 40 | 1.04 | 1085 | 0.86 | 0.53 |
| Note: (8) Measured at 1050°C. | | | | |

Table 3-1

| Sample No. | Properties | | | | |
|---|---|---|---|---|---|
| | $D^{(9)}$ (g/cm$^3$) | $\rho^{(10)}$ (Ω·m) | $\mu i^{(11)}$ | $\tan\delta/\mu^{(12)}$ ($\times 10^{-6}$) | $Dav^{(13)}$ (μm) |
| Example 1 | 4.8514 | -[14] | 716 | 0.02 | 4.3 |
| Example 2 | 4.8969 | 2.3 | 658 | 0.83 | 4.14 |
| Example 3 | 4.8951 | 2.4 | 572 | 1.04 | 4.24 |
| Example 4 | 4.8864 | 2.3 | 516 | 1.64 | 3.98 |
| Example 5 | 4.8798 | 2.3 | 465 | 1.67 | 4 |
| Comp. Ex. 1 | 4.9041 | 2.7 | 977 | 3.14 | 4.04 |
| Comp. Ex. 2 | 4.8829 | - | 1016 | 2.04 | 4.02 |
| Example 6 | 4.8806 | - | 803 | 0.02 | 4.44 |
| Example 7 | 4.8904 | 2.7 | 821 | 1.2 | 4.44 |
| Example 8 | 4.9056 | 2.7 | 748 | 0.9 | 4.38 |
| Example 9 | 4.8573 | 2.8 | 673 | 0.8 | 4.16 |
| Example 10 | 4.8751 | 2.7 | 607 | 1.1 | 3.77 |
| Example 11 | 4.8428 | - | 553 | 0.0 | 4.12 |
| Example 12 | 4.9363 | 2.8 | 1002 | 2.4 | 4.37 |
| Example 13 | 4.8972 | 2.8 | 929 | 2.1 | 4.66 |
| Example 14 | 4.9332 | 2.7 | 847 | 1.9 | 4.36 |
| Example 15 | 4.8928 | 2.7 | 784 | 1.4 | 4.39 |
| Example 16 | 4.8829 | - | 680 | 0.2 | 4.19 |
| Example 17 | 4.8806 | - | 666 | 1.4 | 3.74 |
| Example 18 | 4.8514 | - | 665 | 1.3 | 4.01 |

(continued)

| Sample No. | Properties | | | | |
|---|---|---|---|---|---|
| | D[9] (g/cm$^3$) | ρ[10] (Ω·m) | μi[11] | tanδ/μ[12] (×10$^{-6}$) | Dav[13] (μm) |
| Example 19 | 4.9375 | 3.6 | 709 | 1.59 | 4.57 |

Note: (9) Density of the sintered body.
(10) Specific resistance.
(11) Initial permeability at 100 kHz and 0.4 A/m.
(12) Relative loss coefficient at 100 kHz and 0.4 A/m.
(13) Average crystal grain size.
(14) Not measured.

Table 3-2

| Sample No. | Properties | | | | |
|---|---|---|---|---|---|
| | D[15] (g/cm$^3$) | (16) (Ω·m) | μi[17] | tanδ/μ[18] (×10$^{-6}$) | Dav[19] (μm) |
| Example 20 | 4.9403 | 3.5 | 606 | 0.96 | 4.24 |
| Example 21 | 4.8970 | 3.6 | 535 | 0.27 | 4.31 |
| Example 22 | 4.9056 | 3.5 | 476 | 1.35 | 4.12 |
| Example 23 | 4.8552 | 1.3 | 624 | 0.7 | 3.55 |
| Example 24 | 4.8278 | 1.2 | 559 | 1.5 | 3.66 |
| Example 25 | 4.8111 | 1.3 | 500 | 1.4 | 3.57 |
| Example 26 | 4.8510 | 1.2 | 465 | 1.6 | 3.43 |
| Example 27 | 4.7995 | 1.2 | *515* | 1.0 | 2.48 |
| Example 28 | 4.8210 | 1.6 | 510 | 1.6 | 3.05 |
| Example 29 | 4.6693 | 1.6 | 476 | 1.3 | 2.62 |
| Example 30 | 4.8644 | 7.0 | 546 | 2.0 | 3.7 |
| Example 31 | 4.8594 | 5.4 | 528 | 2.5 | 3.46 |
| Example 32 | 4.8865 | 7.6 | 520 | 2.6 | 3.23 |
| Example 33 | 4.8511 | 6.4 | 522 | 2.0 | 3.15 |
| Example 34 | 4.9212 | 5.8 | 499 | 2.4 | 2.88 |
| Example 35 | 4.8526 | 3.3 | 452 | 5.8 | 2.42 |
| Example 36 | 4.9010 | 4.7 | 474 | 1.8 | 2.11 |
| Example 37 | 4.8773 | 4.5 | 479 | 1.5 | 2.37 |
| Example 38 | 4.8381 | 5.6 | 474 | 2.1 | 2.3 |
| Example 39 | 4.8601 | 5.7 | 464 | 3.3 | 2.32 |
| Example 40 | 4.8581 | 5.1 | 463 | 2.3 | 2.12 |

Note: (15)-(19) Same as (9)-(13) in Table 3-1.

Table 4-1

| Sample No. | Core Loss Pcv (kW/m$^3$) 2 MHz, 75 mT | | | | | |
|---|---|---|---|---|---|---|
| | -30°C | -15°C | 0°C | 20°C | 40°C | 60°C |
| Example 1 | -[20] | 2145 | 2107 | 1906 | 1636 | 1413 |
| Example 2 | - | 509 | 667 | 799 | 828 | 832 |
| Example 3 | - | 1104 | 342 | 431 | 556 | 714 |

(continued)

| Sample No. | Core Loss Pcv (kW/m$^3$) 2 MHz, 75 mT | | | | | |
|---|---|---|---|---|---|---|
| | -30°C | -15°C | 0°C | 20°C | 40°C | 60°C |
| Example 4 | - | 1880 | 1431 | 366 | 601 | 598 |
| Example 5 | - | 2576 | 1902 | 481 | 469 | 847 |
| Comp. Ex. 1 | - | 13200 | 10420 | 10610 | 9897 | 9612 |
| Comp. Ex. 2 | - | 8758 | 8269 | 7613 | 7024 | 6219 |
| Example 6 | - | 4113 | 3729 | 3128 | 2528 | 1990 |
| Example 7 | 1067 | 1464 | 1691 | 1729 | 1598 | 1473 |
| Example 8 | 895 | 601 | 606 | 850 | 956 | 1019 |
| Example 9 | 1968 | 582 | - | 562 | 750 | 894 |
| Example 10 | 3515 | 1792 | 1228 | 712 | 729 | 718 |
| Example 11 | 4907 | 2919 | 1473 | 628 | - | 752 |
| Example 12 | 2976 | 3319 | 3393 | 3216 | 3035 | 2751 |
| Example 13 | 77 | 1188 | 1654 | 1980 | 2021 | 1899 |
| Example 14 | 1386 | 576 | 804 | 1252 | 1513 | 1643 |
| Example 15 | 2995 | 1403 | 693 | 759 | 1009 | 1263 |
| Example 16 | 8313 | 2973 | 1532 | 893 | 1051 | 1342 |
| Example 17 | - | 6817 | 2955 | 1350 | 1315 | 1615 |
| Example 18 | - | - | 6597 | 2609 | 1713 | 1869 |
| Example 19 | - | 730 | 1004 | 1167 | 1164 | 1103 |
| Note: (20) Not measured. | | | | | | |

Table 4-2

| Sample No. | Core Loss Pcv (kW/m$^3$) 2 MHz, 75 mT | | | | | |
|---|---|---|---|---|---|---|
| | 80°C | 100°C | 120°C | 140°C | 150°C | Pcv$_{max}$[21] |
| Example 1 | 1316 | 1487 | 2097 | 3703 | 4965 | 1906 |
| Example 2 | 895 | 1115 | 1934 | 3294 | 4669 | 1115 |
| Example 3 | -[22] | 1181 | 1968 | 3931 | 6655 | 1181 |
| Example 4 | - | 1158 | 1860 | 4126 | 6789 | 1158 |
| Example 5 | - | 1504 | 2156 | 5530 | 8260 | 1504 |
| Comp. Ex. 1 | 8808 | 8060 | 7583 | 7616 | 7943 | 10610 |
| Comp. Ex. 2 | 5282 | 4489 | 4253 | 4721 | 5269 | 7613 |
| Example 6 | 1629 | 1578 | 2010 | 3307 | 4489 | 3128 |
| Example 7 | 1430 | 1642 | 2339 | 3897 | 4456 | 1729 |
| Example 8 | 1103 | 1370 | 2017 | 3607 | 4873 | 1370 |
| Example 9 | 1070 | 1374 | 2080 | 3801 | 5301 | 1374 |
| Example 10 | 942 | 1263 | 1982 | 3600 | 5436 | 1263 |
| Example 11 | 990 | 1280 | 1888 | 3507 | 5092 | 1280 |
| Example 12 | 2518 | 2533 | 3048 | 4176 | 5037 | 3216 |
| Example 13 | 1939 | 2247 | 3005 | 4156 | 4975 | 2247 |

(continued)

| Sample No. | Core Loss Pcv (kW/m³) 2 MHz, 75 mT | | | | | |
|---|---|---|---|---|---|---|
| | 80°C | 100°C | 120°C | 140°C | 150°C | Pcv$_{max}$[21] |
| Example 14 | 1839 | 2251 | 3081 | 4616 | 5033 | 2251 |
| Example 15 | 1509 | 1950 | 2749 | 4441 | 5693 | 1950 |
| Example 16 | 1694 | 2240 | 3243 | 5126 | 5496 | 2240 |
| Example 17 | 1999 | 2565 | 3518 | 5194 | 6250 | 2565 |
| Example 18 | 2273 | 2812 | 3616 | 4928 | 5971 | 2812 |
| Example 19 | 1094 | 1362 | 1894 | 2977 | 3960 | 1362 |

Note: (21) Maximum core loss Pcv$_{max}$ at 20-100°C at a frequency of 2 MHz and an exciting magnetic flux density of 75 mT.
(22) Not measured.

Table 4-3

| Sample No. | Core Loss Pcv (kW/m³) 2 MHz, 75 mT | | | | | |
|---|---|---|---|---|---|---|
| | -30°C | -15°C | 0°C | 20°C | 40°C | 60°C |
| Example 20 | -[23] | 931 | 968 | 592 | 761 | 883 |
| Example 21 | - | 1499 | 768 | 920 | 965 | 641 |
| Example 22 | - | 3225 | 1775 | 744 | 875 | 1187 |
| Example 23 | - | 481 | 615 | 748 | 791 | 834 |
| Example 24 | - | 979 | 348 | -[1] | 503 | 618 |
| Example 25 | - | 1438 | 346 | - | 391 | 1384 |
| Example 26 | - | 1986 | 830 | 320 | - | 504 |
| Example 27 | 976 | 443 | 380 | 460 | 572 | 701 |
| Example 28 | 810 | 409 | 387 | 863 | - | 814 |
| Example 29 | 1536 | 827 | 529 | 685 | 834 | 1091 |
| Example 30 | 1379 | 281 | 362 | 659 | 442 | 519 |
| Example 31 | 1315 | 367 | 364 | 884 | 656 | 765 |
| Example 32 | 1040 | 573 | 299 | 449 | 549 | 656 |
| Example 33 | 677 | 331 | 414 | *553* | 666 | 1159 |
| Example 34 | 723 | 768 | 684 | 1076 | 1093 | 1202 |
| Example 35 | 518 | 397 | 1036 | 613 | 751 | 950 |
| Example 36 | 714 | 316 | 393 | 513 | 611 | 688 |
| Example 37 | 470 | 335 | 404 | 496 | 592 | - |
| Example 38 | 475 | 438 | 502 | 636 | - | 887 |
| Example 39 | 596 | 512 | 601 | 742 | 998 | 1025 |
| Example 40 | 637 | 1027 | 630 | 811 | 931 | 1030 |

Note: (23) Not measured.

Table 4-4

| Sample No. | Core Loss Pcv (kW/m$^3$) 2 MHz, 75 mT | | | | | |
|---|---|---|---|---|---|---|
| | 80°C | 100°C | 120°C | 140°C | 150°C | Pcv$_{max}$[24] |
| Example 20 | 1102 | 1354 | 2114 | 3375 | 4642 | 1354 |
| Example 21 | 904 | 1128 | 1755 | 3368 | 4155 | 1128 |
| Example 22 | 908 | 1227 | 1833 | 3508 | 5075 | 1227 |
| Example 23 | 920 | 1169 | 1838 | 4203 | 6485 | 1169 |
| Example 24 | 841 | 1107 | 1879 | 4484 | 7891 | 1107 |
| Example 25 | 770 | 1133 | 1861 | 7292 | 10310 | 1384 |
| Example 26 | 714 | 1062 | 1786 | 7452 | 10730 | 1062 |
| Example 27 | 945 | 1440 | 3216 | 8500 | 11410 | 1440 |
| Example 28 | 939 | 1282 | 2537 | 9053 | 10990 | 1282 |
| Example 29 | -[25] | 1991 | 6572 | 11530 | 13000 | 1991 |
| Example 30 | 688 | 918 | 1400 | 2932 | 5652 | 918 |
| Example 31 | 866 | 1186 | 1757 | 4467 | 7529 | 1186 |
| Example 32 | 833 | 1110 | 2406 | 5524 | 8495 | 1110 |
| Example 33 | 931 | 1242 | 2095 | 6628 | 9643 | 1242 |
| Example 34 | 1618 | 1812 | 3573 | 8891 | 11190 | 1812 |
| Example 35 | 1192 | 1535 | 3261 | 10280 | 11950 | 1535 |
| Example 36 | 861 | 1061 | 1711 | 9551 | 11410 | 1061 |
| Example 37 | 814 | 982 | 1416 | 8891 | 11130 | 982 |
| Example 38 | 1031 | 1304 | 2401 | 10470 | 11780 | 1304 |
| Example 39 | 1181 | 1463 | 3834 | 10780 | 12200 | 1463 |
| Example 40 | 1261 | 1546 | 4006 | 10370 | 12100 | 1546 |
| Note: (24) Same as (21) in Table 4-2.<br>(25) Not measured. | | | | | | |

As is clear from Table 4, the MnZn soft ferrite magnetic cores of Examples 1-40 all had a maximum core loss Pcv$_{max}$ of 3800 kW/m$^3$ or less at 20-100°C at a frequency of 2 MHz and an exciting magnetic flux density of 75 mT, demonstrating low core loss over a wide temperature range. In contrast, the maximum core loss Pcv$_{max}$ of the MnZn soft ferrite magnetic cores in Comparative Examples 1 and 2 exceeded 3800 kW/m$^3$ at 20-100°C at a frequency of 2 MHz and an exciting magnetic flux density of 75 mT.

Each of the MnZn soft ferrite magnetic cores in Examples 2-5 and 7-29, and Comparative Example 1, was thermally demagnetized by holding it at 320°C for 1 hour, followed by temperature-lowering at a cooling speed of -150°C/hr, and then returned to a state equivalent to that before heat treatment. After that, the core loss was measured at 20°C-120°C using the same method as above, at a frequency of 1 MHz and an exciting magnetic flux density of 100 mT.

Table 5-1

| Sample No. | Core Loss Pcv (kW/m$^3$) 1 MHz, 100 mT after Thermal Demagnetization | | | | | |
|---|---|---|---|---|---|---|
| | 20°C | 40°C | 60°C | 80°C | 100°C | 120°C | Pcv$_{max}$[26] |
| Example 2 | 2326 | 2394 | 2401 | 2546 | 2854 | 3559 | 2854 |
| Example 3 | 1387 | 1660 | 1910 | 2203 | 2726 | 3558 | 2726 |
| Example 4 | 1056 | 1206 | 1546 | 1897 | 2489 | 3521 | 2489 |
| Example 5 | 1066 | 1083 | 1367 | 1719 | 2444 | 3611 | 2444 |
| Comp. Ex. 1 | 7615 | 6344 | 5115 | 4205 | 3591 | 3183 | 7615 |

(continued)

| Sample No. | Core Loss Pcv (kW/m$^3$) 1 MHz, 100 mT after Thermal Demagnetization | | | | | | |
|---|---|---|---|---|---|---|---|
| | 20°C | 40°C | 60°C | 80°C | 100°C | 120°C | Pcv$_{max}$[(26)] |
| Example 7 | 2293 | 2222 | 2137 | 2121 | 2279 | 2714 | 2293 |
| Example 8 | 1615 | 1739 | 1809 | 1923 | 2189 | 2694 | 2189 |
| Example 9 | 1356 | 1633 | 1843 | 2061 | 2404 | 2970 | 2404 |
| Example 10 | 1080 | 1265 | 1546 | 1859 | 2315 | 2978 | 2315 |
| Example 11 | 1444 | 1258 | 1510 | 1877 | 2364 | 3106 | 2364 |
| Example 12 | 2959 | 2926 | 2795 | 2695 | 2674 | 2831 | 2959 |
| Example 13 | 2400 | 2424 | 2402 | 2462 | 2486 | 2774 | 2486 |
| Example 14 | 2013 | 2198 | 2291 | 2372 | 2534 | 2859 | 2534 |
| Example 15 | 1419 | 1783 | 2033 | 2222 | 2464 | 2864 | 2464 |
| Note: (26) Maximum core loss Pcv$_{max}$ at 20-100°C at a frequency of 1 MHz and an exciting magnetic flux density of 100 mT. | | | | | | | |

Table 5-2

| Sample No. | Core Loss Pcv (kW/m$^3$) 1 MHz, 100 mT after Thermal Demagnetization | | | | | | |
|---|---|---|---|---|---|---|---|
| | 20°C | 40°C | 60°C | 80°C | 100°C | 120°C | Pcv$_{max}$[(27)] |
| Example 16 | 1381 | 1611 | 1974 | 2296 | 2697 | 3192 | 2697 |
| Example 17 | 1724 | 1529 | 1887 | 2254 | 2684 | 3203 | 2684 |
| Example 18 | 3557 | 1781 | 1804 | 2190 | 2656 | 3216 | 3557 |
| Example 19 | 1916 | 1890 | 1832 | 1874 | 2113 | 2659 | 2113 |
| Example 20 | 1443 | 1596 | 1736 | 1971 | 2374 | 3046 | 2374 |
| Example 21 | 1188 | 1340 | 1569 | 1875 | 2350 | 3156 | 2350 |
| Example 22 | 1721 | 1464 | 1630 | 1963 | 2486 | 3408 | 2486 |
| Example 23 | 1656 | 1744 | 1860 | 2127 | 2777 | 3886 | 2777 |
| Example 24 | 1241 | 1485 | 1746 | 2186 | 3003 | 4306 | 3003 |
| Example 25 | 1174 | 1393 | 1881 | 2362 | 3390 | 4829 | 3390 |
| Example 26 | 1599 | 1529 | 1875 | 3017 | 3635 | 5190 | 3635 |
| Example 27 | 1188 | 1619 | 1700 | 2145 | 2981 | 4295 | 2981 |
| Example 28 | 1212 | 1438 | 1708 | 2355 | 2911 | 4127 | 2911 |
| Example 29 | 1547 | 1817 | 2143 | 2660 | 3607 | 4961 | 3607 |
| Note: (27) Same as (26) in Table 5-1. | | | | | | | |

As is clear from Table 5, the MnZn soft ferrite magnetic cores of Examples 2-5 and 7-29 after thermal demagnetization all had a maximum core loss Pcv$_{max}$ of 3800 kW/m$^3$ or less at 20-100°C at a frequency of 1 MHz and an exciting magnetic flux density of 100 mT, demonstrating low core loss over a wide temperature range. In contrast, the maximum core loss Pcv$_{max}$ of the MnZn soft ferrite magnetic cores of Comparative Example 1 after thermal demagnetization exceeded 3800 kW/m$^3$ at 20-100°C at a frequency of 1 MHz and an exciting magnetic flux density of 100 mT.

Examples 41-48, Comparative Examples 3-9

Annular MnZn soft ferrite magnetic cores having an outer diameter of 8 mm, an inner diameter of 4 mm and a thickness of 2.1 mm were produced in the same manner as in Example 1, except for the proportions shown in Table 6 and the production conditions shown in Table 7. The density, specific resistance ρ, initial permeability μi, relative loss coefficient tanδ/μ, and core loss Pcv at a frequency of 2 MHz and an exciting magnetic flux density of 75 mT of each MnZn soft ferrite magnetic core were measured using the same methods as above. The results are shown in Tables 8 and 9.

Table 6-1

| Sample No. | Composition | | | | | | |
|---|---|---|---|---|---|---|---|
| | Main Components (% by mol) | | | Sub-Components (% by mass)[28] | | | |
| | MnO | $Fe_2O_3$ | ZnO | $Co_3O_4$ | $CaCO_3$ | $SiO_2$ | $Nb_2O_5$ |
| Comp. Ex. 3 | 39.14 | 54.00 | 6.86 | 0 | 0.10 | 0.005 | 0 |
| Comp. Ex. 4 | 39.13 | 54.00 | 6.87 | 0.2 | 0.10 | 0.005 | 0 |
| Example 41 | 39.16 | 53.98 | 6.87 | 0.5 | 0.10 | 0.005 | 0 |
| Example 42 | 39.15 | 53.98 | 6.87 | 0.7 | 0.10 | 0.005 | 0 |
| Comp. Ex. 5 | 41.98 | 55.01 | 3.01 | 0 | 0.10 | 0.005 | 0 |
| Comp. Ex. 6 | 41.98 | 55.01 | 3.01 | 0.2 | 0.10 | 0.005 | 0 |
| Example 43 | 41.98 | 55.01 | 3.01 | 0.25 | 0.10 | 0.005 | 0 |
| Example 44 | 41.98 | 55.01 | 3.01 | 0.4 | 0.10 | 0.005 | 0 |
| Comp. Ex. 7 | 37.51 | 53.22 | 9.27 | 0.3 | 0.10 | 0.005 | 0 |
| Comp. Ex. 8 | 37.49 | 53.19 | 9.32 | 0.5 | 0.10 | 0.005 | 0 |
| Comp. Ex. 9 | 43.83 | 55.13 | 1.04 | 0.5 | 0.10 | 0.005 | 0 |
| Example 45 | 40.90 | 54.73 | 4.37 | 0.4 | 0.04 | 0.010 | 0.02 |
| Example 46 | 40.87 | 54.75 | 4.38 | 0.4 | 0.07 | 0.010 | 0.02 |
| Example 47 | 40.86 | 54.77 | 4.37 | 0.4 | 0.04 | 0.005 | 0.02 |
| Example 48 | 40.88 | 54.75 | 4.38 | 0.4 | 0.07 | 0.005 | 0.02 |
| Note: (28) Same as (1) in Table 1-1. | | | | | | | |

Table 6-2

| Sample No. | $ZnO/Fe_2O_3$ Molar Ratio | $Co_3O_4/Fe_2O_3$ Ratio[29] | $(Co_3O_4)^2/ZnO$ Ratio[30] |
|---|---|---|---|
| Comp. Ex. 3 | 0.127 | 0 | 0 |
| Comp. Ex. 4 | 0.127 | 0.0037 | 0.0058 |
| Example 41 | 0.127 | 0.0093 | 0.0364 |
| Example 42 | 0.127 | 0.0130 | 0.0713 |
| Comp. Ex. 5 | 0.055 | 0 | 0 |
| Comp. Ex. 6 | 0.055 | 0.0036 | 0.0133 |
| Example 43 | 0.055 | 0.0045 | 0.0208 |
| Example 44 | 0.055 | 0.0073 | 0.0532 |
| Comp. Ex. 7 | 0.174 | 0.0056 | 0.0097 |
| Comp. Ex. 8 | 0.175 | 0.0094 | 0.0268 |
| Comp. Ex. 9 | 0.019 | 0.0091 | 0.2407 |
| Example 45 | 0.080 | 0.0073 | 0.0366 |
| Example 46 | 0.080 | 0.0073 | 0.0366 |
| Example 47 | 0.080 | 0.0073 | 0.0366 |

(continued)

| Sample No. | ZnO/Fe$_2$O$_3$ Molar Ratio | Co$_3$O$_4$/Fe$_2$O$_3$ Ratio[29] | (Co$_3$O$_4$)$^2$/ZnO Ratio[30] |
|---|---|---|---|
| Example 48 | 0.080 | 0.0073 | 0.0366 |

Note: (29) and (30) Same as (3) and (4) in Table 1-3.

Table 7

| Sample No. | Production Conditions | | | |
|---|---|---|---|---|
| | Pulverized Particle Size (μm) | Keeping Temperature (°C) | Oxygen Concentration (% by volume) | |
| | | | Keeping Step | Temperature-Lowering Step (31) |
| Comp. Ex. 3 | 1.05 | 1205 | 0.86 | 0.77 |
| Comp. Ex. 4 | 1.05 | 1205 | 0.86 | 0.77 |
| Example 41 | 1.05 | 1205 | 0.86 | 0.77 |
| Example 42 | 1.07 | 1205 | 0.86 | 0.77 |
| Comp. Ex. 5 | 1.03 | 1175 | 0.86 | 0.47 |
| Comp. Ex. 6 | 1.03 | 1175 | 0.86 | 0.47 |
| Example 43 | 1.03 | 1175 | 0.86 | 0.47 |
| Example 44 | 1.04 | 1175 | 0.86 | 0.47 |
| Comp. Ex. 7 | 1.04 | 1175 | 0.86 | 1.04 |
| Comp. Ex. 8 | 1.04 | 1175 | 0.86 | 1.04 |
| Comp. Ex. 9 | 1.02 | 1175 | 0.86 | 0.35 |
| Example 45 | 1.02 | 1100 | 0.86 | 0.53 |
| Example 46 | 1.03 | 1100 | 0.86 | 0.53 |
| Example 47 | 1.02 | 1070 | 0.86 | 0.53 |
| Example 48 | 1.03 | 1070 | 0.86 | 0.53 |

Note: (31) Same as (7) in Table 2-1.

Table 8

| Sample No. | Properties | | | | |
|---|---|---|---|---|---|
| | D[32] (g/cm$^3$) | ρ[33] (Ω·m) | μi[34] | tanδ/μ[35] (×10$^{-6}$) | Dav[36] (μm) |
| Comp. Ex. 3 | 4.9114 | -[37] | 1104 | 3.2 | 4.45 |
| Comp. Ex. 4 | 4.8913 | - | 963 | 3.0 | 4.45 |
| Example 41 | 4.8798 | - | 637 | 1.4 | 4.26 |
| Example 42 | 4.8856 | - | 563 | 2.0 | 4.82 |
| Comp. Ex. 5 | 4.9142 | 2.5 | 1004 | 2.4 | 4.19 |
| Comp. Ex. 6 | 4.9157 | 1.9 | 800 | 2.7 | 4.22 |
| Example 43 | 4.8968 | 2.8 | 730 | 2.8 | 4.37 |
| Example 44 | 4.9125 | 2.7 | 473 | 4.5 | 4.37 |
| Comp. Ex. 7 | 4.8429 | 5.5 | 799 | 1.8 | 3.73 |
| Comp. Ex. 8 | 4.8409 | 6.0 | 744 | 2.2 | 3.70 |
| Comp. Ex. 9 | 4.9000 | 2.8 | 371 | 0.1 | 4.82 |
| Example 45 | 4.8855 | 1.1 | 520 | - | 2.91 |

(continued)

| Sample No. | Properties | | | | |
|---|---|---|---|---|---|
| | D(32) (g/cm3) | ρ(33) (Ω·m) | μi(34) | tanδ/μ(35) (×10-6) | Dav(36) (μm) |
| Example 46 | 4.8865 | 3.1 | 507 | - | 3.04 |
| Example 47 | 4.8969 | 1.5 | 494 | - | 3.41 |
| Example 48 | 4.8644 | 3.7 | 478 | - | 3.12 |

Note: (32)-(36) Same as (9)-(13) in Table 3-1.
(37) Not measured.

Table 9-1

| Sample No. | Core Loss Pcv (kW/m$^3$) 2 MHz, 75 mT | | | | | |
|---|---|---|---|---|---|---|
| | -30°C | -15°C | 0°C | 20°C | 40°C | 60°C |
| Comp. Ex. 3 | 13560 | 12960 | 12230 | 11000 | 10590 | 10030 |
| Comp. Ex. 4 | 7587 | 7197 | 6822 | 6325 | 5953 | 5158 |
| Example 41 | 2585 | 1106 | 543 | 931 | 982 | 1313 |
| Example 42 | 8610 | 10670 | 5842 | 2318 | 1534 | 1723 |
| Comp. Ex. 5 | -(38) | 14810 | 9693 | 10720 | 10250 | 9342 |
| Comp. Ex. 6 | - | 6201 | 5581 | 4745 | 3937 | 3156 |
| Example 43 | 3705 | 3432 | 3074 | 2529 | 1944 | 1446 |
| Example 44 | 2863 | 997 | 420 | 391 | 427 | 561 |
| Comp. Ex. 7 | - | - | 5235 | 5305 | 5501 | 5546 |
| Comp. Ex. 8 | - | - | 3455 | 3969 | 4342 | 4749 |
| Comp. Ex. 9 | - | - | 1103 | 1543 | 1938 | 2288 |
| Example 45 | 472 | 213 | 269 | - | 510 | 605 |
| Example 46 | 863 | 300 | 251 | 370 | 462 | 583 |
| Example 47 | 280 | 177 | 242 | - | 463 | 585 |
| Example 48 | 608 | 223 | 322 | 425 | 516 | 667 |

Note: (38) Not measured.

Table 9-2

| Sample No. | Core Loss Pcv (kW/m$^3$) 2 MHz, 75 mT | | | | | |
|---|---|---|---|---|---|---|
| | 80°C | 100°C | 120°C | 140°C | 150°C | Pcv$_{max}$(39) |
| Comp. Ex. 3 | 9677 | 9028 | 8522 | 8357 | 8552 | 11000 |
| Comp. Ex. 4 | 4715 | 4394 | 5446 | 5276 | 5811 | 6325 |
| Example 41 | 1653 | 2217 | 3195 | 4817 | 6246 | 2217 |
| Example 42 | 2076 | 2822 | 4773 | 6491 | 8422 | 2822 |
| Comp. Ex. 5 | 8211 | 7203 | 6322 | 6331 | 6707 | 10720 |
| Comp. Ex. 6 | 2591 | 2368 | 2700 | 3953 | 5015 | 4745 |
| Example 43 | 1131 | 1116 | 1573 | 2860 | 4617 | 2529 |
| Example 44 | 1465 | 1136 | 2104 | 6130 | 9912 | 1465 |
| Comp. Ex. 7 | 5711 | 5789 | 6706 | 7909 | 8578 | 5789 |
| Comp. Ex. 8 | 5251 | 6057 | 7391 | 10300 | 11760 | 6057 |

(continued)

| Sample No. | Core Loss Pcv (kW/m³) 2 MHz, 75 mT | | | | | |
|---|---|---|---|---|---|---|
| | 80°C | 100°C | 120°C | 140°C | 150°C | Pcv$_{max}$[(39)] |
| Comp. Ex. 9 | 2700 | 4198 | 5151 | 9533 | 17080 | 4198 |
| Example 45 | 773 | 1024 | 1489 | 4759 | 8552 | 1024 |
| Example 46 | 681 | 898 | 1401 | 4999 | 8710 | 898 |
| Example 47 | 703 | 929 | 1338 | 5604 | 8567 | 929 |
| Example 48 | 785 | 1036 | 1714 | 7065 | 10170 | 1036 |
| Note: (39) Same as (21) in Table 4-2. | | | | | | |

As is clear from Table 9, the MnZn soft ferrite magnetic cores of Examples 41-48 all had a maximum core loss Pcv$_{max}$ of 3800 kW/m³ or less at 20-100°C at a frequency of 2 MHz and an exciting magnetic flux density of 75 mT, demonstrating low core loss over a wide temperature range.

In contrast, the maximum core loss Pcv$_{max}$ of Comparative Example 3 and Comparative Example 5, whose Co content is 0% by mass, at 20-100°C was 11000 kW/m³ and 10720 kW/m³, respectively, both exceeding 3800 kW/m³.

Comparative Example 4, where the Co content was 0.2% by mass (less than 0.25% by mass), the $Co_3O_4/Fe_2O_3$ ratio was 0.0037 (less than 0.00450), and the $(Co_3O_4)^2/ZnO$ ratio was 0.0058 (less than 0.0135), has a maximum core loss Pcv$_{max}$ of 6325 kW/m³ (greater than 3800 kW/m³) at 20-100°C. Similarly, the maximum core loss Pcv$_{max}$ at 20-100°C of Comparative Example 6, in which the Co content was 0.2% by mass (less than 0.25% by mass), the $Co_3O_4/Fe_2O_3$ ratio was 0.0036 (less than 0.00450), and the $(Co_3O_4)^2/ZnO$ ratio was 0.0133 (less than 0.0135), was 4745 kW/m³, which is also greater than 3800 kW/m³. In Comparative Example 6, the Pcv$_{max}$ at 1 MHz and 100 mT was 3309 kW/m³, which was less than 3800 kW/m³, but the Pcv$_{max}$ at 2 MHz and 75 mT was 4745 kW/m³, which was greater than 3800 kW/m³, so it was selected as a Comparative Example. The large Pcv$_{max}$ of 4745 kW/m³ at 2 MHz and 75 mT of the MnZn soft ferrite magnetic core of Comparative Example 6 is thought to be due to the fact that the $Co_3O_4$ content is less than 0.2% by mass.

Comparative Example 7, where the Zn content calculated as ZnO was 9.27% by mol (greater than 7% by mol), the $ZnO/Fe_2O_3$ molar ratio was 0.174 (greater than 0.127), and the $(Co_3O_4)^2/ZnO$ ratio was 0.0097 (less than 0.0135), and Comparative Example 8, where the Zn content calculated as ZnO was 9.32% by mol (greater than 7% by mol), the $ZnO/Fe_2O_3$ molar ratio was 0.175 (greater than 0.127) had a maximum core loss Pcv$_{max}$ at 20-100°C at a frequency of 2 MHz and an exciting magnetic flux density of 75 mT of 5789 kW/m³ and 6057 kW/m³, respectively, both of which exceeded 3800 kW/m³.

Furthermore, Comparative Example 9, where the Zn content calculated as ZnO was 1.04% by mol (less than 3% by mol), the $ZnO/Fe_2O_3$ molar ratio was 0.019 (less than 0.0541), and the $(Co_3O_4)^2/ZnO$ ratio was 0.2407 (greater than 0.112), had a maximum core loss Pcv$_{max}$ at 20-100°C at a frequency of 2 MHz and an exciting magnetic flux density of 75 mT of 4198 kW/m³, exceeding 3800 kW/m³.

The MnZn soft ferrite magnetic cores of Examples 41, 43, and 45, and Comparative Examples 4 and 6 were thermally demagnetized under the same conditions as Examples 2-5, 7-29 and Comparative Example 1, and then returned to the same state as before heat treatment. Then, the core loss was measured at 20°C to 120°C at a frequency of 1 MHz and an exciting magnetic flux density of 100 mT using the same method as above. The results are shown in Table 10.

Table 10

| Sample No. | Core Loss Pcv (kW/m³) 1 Mhz, 100 Mt after Thermal Demagnetization | | | | | | |
|---|---|---|---|---|---|---|---|
| | 20°C | 40°C | 60°C | 80°C | 100°C | 120°C | Pcv$_{max}$[(40)] |
| Comp. Ex. 4 | 4005 | 3576 | 3235 | 3044 | 3153 | 3757 | 4005 |
| Example 41 | 2192 | 2961 | 3580 | 4480 | 5989 | 8293 | 5989 |
| Comp. Ex. 6 | 3309 | 2766 | 2335 | 2116 | 2353 | 3455 | 3309 |
| Example 43 | 2065 | 1780 | 1632 | 1757 | 2518 | 4694 | 2518 |
| Example 45 | 1697 | 1349 | 1646 | 2091 | 2997 | 4609 | 2997 |
| Note: (40) Same as (26) in Table 5-1. | | | | | | | |

Example 49

Examples 1-40, Comparative Examples 1 and 2 are data from longterm heat treatments of 96 hours, so shorter heat treatment conditions were investigated in consideration of productivity. A sintered MnZn soft ferrite body was produced in the same manner as in Example 1, except for the proportions shown in Table 11 and the production conditions shown in Table 12. This sintered MnZn soft ferrite body was heat-treated at 250°C for 1 hour, and then slowly cooled at a rate of 10°C/hr to obtain annular MnZn soft ferrite magnetic cores with an outer diameter of 8 mm, an inner diameter of 4 mm and a thickness of 2.1 mm. The density, specific resistance $\rho$, initial permeability $\mu_i$, relative loss coefficient $\tan\delta/\mu$, and core loss Pcv at a frequency of 2 MHz and an exciting magnetic flux density of 75 mT of this MnZn soft ferrite magnetic core were measured using the same methods as above. The results are shown in Tables 13 and 14.

Example 50

Examples 1-40, Comparative Examples 1 and 2 are data from longterm heat treatments of 96 hours, so shorter heat treatment conditions were investigated in consideration of productivity. A sintered MnZn soft ferrite body was produced in the same manner as in Example 1, except for the proportions shown in Table 11 and the production conditions shown in Table 12. This sintered MnZn soft ferrite body was heat-treated at 250°C for 11 hour, and then rapidly cooled at a rate of 150°C/hr to obtain annular MnZn soft ferrite magnetic cores with an outer diameter of 8 mm, an inner diameter of 4 mm and a thickness of 2.1 mm. The density, specific resistance $\rho$, initial permeability $\mu_i$, relative loss coefficient $\tan\delta/\mu$, and core loss Pcv at a frequency of 2 MHz and an exciting magnetic flux density of 75 mT of this MnZn soft ferrite magnetic core were measured using the same methods as above. The results are shown in Tables 13 and 14.

Table 11-1

| Sample No. | Composition | | | | | | |
|---|---|---|---|---|---|---|---|
| | Main Components (% by mol) | | | Sub-Components (% by mass)[41] | | | |
| | MnO | $Fe_2O_3$ | ZnO | $Co_3O_4$ | $CaCO_3$ | $SiO_2$ | $Nb_2O_5$ |
| Example 49 | 40.89 | 54.74 | 4.37 | 0.4 | 0.10 | 0.005 | 0 |
| Example 50 | 40.89 | 54.74 | 4.37 | 0.4 | 0.10 | 0.005 | 0 |
| Note: (41) Same as (1) in Table 1-1. | | | | | | | |

Table 11-2

| Sample No. | ZnO/$Fe_2O_3$ Molar Ratio | $Co_3O_4$/$Fe_2O_3$ Ratio[42] | $(Co_3O_4)^2$/ZnO Ratio[43] |
|---|---|---|---|
| Example 49 | 0.080 | 0.0073 | 0.0366 |
| Example 50 | 0.080 | 0.0073 | 0.0366 |
| Note: (42) and (43) Same as (3) and (4) in Table 1-3. | | | |

Table 12

| Sample No. | Production Conditions | | | |
|---|---|---|---|---|
| | Pulverized Particle Size ($\mu$m) | Keeping Temperature (°C) | Oxygen Concentration (% by volume) | |
| | | | Keeping Step | Temperature-Lowering Step[44] |
| Example 49 | 1.01 | 1175 | 0.86 | 0.53 |
| Example 50 | 1.01 | 1175 | 0.86 | 0.53 |
| Note: (44) Same as (7) in Table 2-1. | | | | |

Table 13

| Sample No. | Properties | | | | |
|---|---|---|---|---|---|
| | $D^{(45)}$ (g/cm³) | $\rho^{(46)}$ (Ω·m) | $\mu i^{(47)}$ | $\tan\delta/\mu^{(48)}$ (×10⁻⁶) | $D_{av}^{(49)}$ (μm) |
| Example 49 | 4.8806 | -[50] | 638 | - | 4.37 |
| Example 50 | 4.8887 | - | 644 | - | 4.26 |
| Note: (45)-(49) Same as (9)-(13) in Table 3-1. <br> (50) Not measured. | | | | | |

Table 14-1

| Sample No. | Core Loss Pcv (kW/m³) 2 MHz, 75 mT | | | | | |
|---|---|---|---|---|---|---|
| | -30°C | -15°C | 0°C | 20°C | 40°C | 60°C |
| Example 49 | 1283 | 1044 | 339 | 666 | 579 | 689 |
| Example 50 | 1622 | 616 | 704 | 544 | 645 | 777 |

Table 14-2

| Sample No. | Core Loss Pcv (kW/m³) 2 MHz, 75 mT | | | | | |
|---|---|---|---|---|---|---|
| | 80°C | 100°C | 120°C | 140°C | 150°C | $Pcv_{max}^{(51)}$ |
| Example 49 | 842 | 1126 | 1756 | 3322 | 4837 | 1126 |
| Example 50 | 908 | 1216 | 2025 | 3286 | 4878 | 1216 |
| Note: (51) Same as (21) in Table 4-2. | | | | | | |

As is clear from Table 14, the MnZn soft ferrite magnetic cores of Examples 49 and 50 both had a maximum core loss $Pcv_{max}$ of 3800 kW/m³ or less at 20-100°C at a frequency of 2 MHz and an exciting magnetic flux density of 75 mT, demonstrating low core loss over a wide temperature range.

Examples 51 and 52

Annular MnZn soft ferrite magnetic cores with an outer diameter of 8 mm, an inner diameter of 4 mm and a thickness of 2.1 mm were obtained in the same manner as in Example 1, except for the proportions shown in Table 15 and the production conditions shown in Table 16. The density, specific resistance $\rho$, initial permeability $\mu i$, relative loss coefficient $\tan\delta/\mu$, and core loss Pcv at a frequency of 2 MHz and an exciting magnetic flux density of 75 mT of each MnZn soft ferrite magnetic core were measured using the same methods as above. The results are shown in Tables 17 and 18.

Table 15-1

| Sample No. | Composition | | | | | | |
|---|---|---|---|---|---|---|---|
| | Main Components (% by mol) | | | Sub-Components (% by mass)[52] | | | |
| | MnO | $Fe_2O_3$ | ZnO | $Co_3O_4$ | $CaCO_3$ | $SiO_2$ | $Nb_2O_5$ |
| Example 51 | 40.88 | 54.74 | 4.38 | 0.4 | 0.04 | 0.005 | 0.02 |
| Example 52 | 40.89 | 54.73 | 4.38 | 0.4 | 0.04 | 0.015 | 0.02 |
| Note: (52) Same as (1) in Table 1-1. | | | | | | | |

Table 15-2

| Sample No. | $ZnO/Fe_2O_3$ Molar Ratio | $Co_3O_4/Fe_2O_3$ Ratio[53] | $(Co_3O_4)^2/ZnO$ Ratio[54] |
|---|---|---|---|
| Example 51 | 0.080 | 0.0073 | 0.0365 |

(continued)

| Sample No. | ZnO/Fe$_2$O$_3$ Molar Ratio | Co$_3$O$_4$/Fe$_2$O$_3$ Ratio[53] | (Co$_3$O$_4$)$^2$/ZnO Ratio[54] |
|---|---|---|---|
| Example 52 | 0.080 | 0.0073 | 0.0366 |
| Note: (53) and (54) Same as (3) and (4) in Table 1-3. | | | |

Table 16

| Sample No. | Production Conditions | | | |
|---|---|---|---|---|
| | Pulverized Particle Size (μm) | Keeping Temperature (°C) | Oxygen Concentration (% by Volume) | |
| | | | Keeping Step | Temperature-Lowering step[55] |
| Example 51 | 1.04 | 1100 | 0.86 | 0.53 |
| Example 52 | 1.03 | 1100 | 0.86 | 0.53 |
| Note: (55) Same as (7) in Table 2-1. | | | | |

Table 17

| Sample No. | Properties | | | | |
|---|---|---|---|---|---|
| | D[56] (g/cm$^3$) | ρ[57] (Ω·m) | μi[58] | tanδ/μ[59] (×10$^{-6}$) | Dav[60] (μm) |
| Example 51 | 4.8743 | 1.3 | 532 | -[61] | 3.53 |
| Example 52 | 4.9048 | 1.1 | 513 | - | 3.51 |
| Note: (56)-( 60) Same as (9)-(13) in Table 3-1. <br> (61) Not measured. | | | | | |

Table 18-1

| Sample No. | Core Loss Pcv (kW/m$^3$) 2 MHz, 75 mT | | | | | |
|---|---|---|---|---|---|---|
| | -30°C | -15°C | 0°C | 20°C | 40°C | 60°C |
| Example 51 | 375 | 193 | 244 | -[62] | 476 | 570 |
| Example 52 | 351 | - | 252 | 367 | 478 | 621 |
| Note: (62) Not measured. | | | | | | |

Table 18-2

| Sample No. | Core Loss Pcv (kW/m$^3$) 2 MHz, 75 mT | | | | | |
|---|---|---|---|---|---|---|
| | 80°C | 100°C | 120°C | 140°C | 150°C | Pcv$_{max}$[63] |
| Example 51 | 752 | 1286 | 2161 | 4025 | 6815 | 1286 |
| Example 52 | 756 | 997 | 1487 | 5830 | 9230 | 997 |
| Note: (63) Same as (21) in Table 4-2. | | | | | | |

As is clear from Table 18, the MnZn soft ferrite magnetic cores of Examples 51 and 52 both had a maximum core loss Pcv$_{max}$ of 3800 kW/m$^3$ or less at 20-100°C at a frequency of 2 MHz and an exciting magnetic flux density of 75 mT, demonstrating low core loss over a wide temperature range.

The MnZn soft ferrite magnetic cores of Examples 51 and 52 were thermally demagnetized under the same conditions as in Examples 2-5 and 7-29, and Comparative Example 1, and then returned to the same state as before heat treatment. Then, the core loss was measured at 20-120°C at a frequency of 1 MHz and an exciting magnetic flux density of 100 mT using the same method as above. The results are shown in Table 19.

Table 19

| Sample No. | Core Loss Pcv (kW/m$^3$) 1 MHz, 100 mT after Thermal Demagnetization | | | | | | |
|---|---|---|---|---|---|---|---|
| | 20°C | 40°C | 60°C | 80°C | 100°C | 120°C | Pcv$_{max}$[64] |
| Example 51 | 1002 | 1523 | 1511 | 1896 | 2664 | 4112 | 2664 |
| Example 52 | 1027 | 1359 | 1985 | 2270 | 3036 | 4673 | 3036 |
| Note: (64) Same as (26) in Table 5-1. | | | | | | | |

Examples 53-55

Sintered MnZn soft ferrite bodies were produced in the same manner as in Example 1 except for the proportions shown in Table 20 and the production conditions shown in Table 21, and annular MnZn soft ferrite magnetic cores with an outer diameter of 8 mm, an inner diameter of 4 mm and a thickness of 2.1 mm were obtained without heat treatment. The density, specific resistance $\rho$, initial permeability $\mu i$, and relative loss coefficient $tan\delta/\mu$ of each MnZn soft ferrite magnetic core were measured using the same methods as above. The results are shown in Table 22. In addition, each MnZn soft ferrite magnetic core was thermally demagnetized under the same conditions as in Examples 2-5 and 7-29 and Comparative Example 1, and then returned to the same state as before heat treatment. Then, the core loss was measured at 20-120°C at a frequency of 1 MHz and an exciting magnetic flux density of 100 mT using the same method as above. The results are shown in Table 23.

Table 20-1

| Sample No. | Composition | | | | | | |
|---|---|---|---|---|---|---|---|
| | Main Components (% by mol) | | | Sub-Components (% by mass)[65] | | | |
| | MnO | Fe$_2$O$_3$ | ZnO | Co$_3$O$_4$ | CaCO$_3$ | SiO$_2$ | Nb$_2$O$_5$ |
| Example 53 | 41.24 | 54.40 | 4.37 | 0.4 | 0.04 | 0.005 | 0.03 |
| Example 54 | 41.23 | 54.41 | 4.37 | 0.4 | 0.04 | 0.010 | 0.03 |
| Example 55 | 40.88 | 54.74 | 4.38 | 0.4 | 0.04 | 0.010 | 0 |
| Note: (65) Same as (1) in Table 1-1. | | | | | | | |

Table 20-2

| Sample No. | ZnO/Fe$_2$O$_3$ Molar Ratio | Co$_3$O$_4$/Fe$_2$O$_3$ Ratio[66] | (Co$_3$O$_4$)$^2$/ZnO Ratio[67] |
|---|---|---|---|
| Example 53 | 0.080 | 0.0074 | 0.0366 |
| Example 54 | 0.080 | 0.0074 | 0.0367 |
| Example 55 | 0.080 | 0.0073 | 0.0365 |
| Note: (66) and (67) Same as (3) and (4) in Table 1-3. | | | |

Table 21

| Sample No. | Production Conditions | | | |
|---|---|---|---|---|
| | Pulverized Particle Size (μm) | Keeping Temperature (°C) | Oxygen Concentration (% by volume) | |
| | | | Keeping Step | Temperature-Lowering step [68] |
| Example 53 | 1.2 | 1130 | 0.86 | 0.53 |
| Example 54 | 1.19 | 1130 | 0.86 | 0.53 |
| Example 55 | 1.2 | 1175 | 2.0 | 0.36 |
| Note: (68) Same as (7) in Table 2-1. | | | | |

Table 22

| Sample No. | Properties | | | | |
|---|---|---|---|---|---|
| | D[69] (g/cm³) | ρ[70] (Ω・m) | μi[71] | tanδ/μ[72] (×10⁻⁶) | Dav[73] (μm) |
| Example 53 | 4.8574 | -[6] | 1233 | -[6] | 3.57 |
| Example 54 | 4.8624 | -[6] | 1194 | -[6] | 2.78 |
| Example 55 | 4.8937 | -[6] | 1060 | -[6] | 4.96 |
| Note: (69)-(73) Same as(9)-(13) in Table 3-1. | | | | | |

Table 23

| Sample No. | Core Loss Pcv (kW/m³) 1 MHz, 100 mT after Thermal Demagnetization | | | | | | |
|---|---|---|---|---|---|---|---|
| | 20°C | 40°C | 60°C | 80°C | 100°C | 120°C | Pcv$_{max}$[74] |
| Example 53 | 1469 | 1571 | 1626 | 1719 | 1893 | 2168 | 1893 |
| Example 54 | 1475 | 1540 | 1629 | 1716 | 1925 | 2214 | 1925 |
| Example 55 | 879 | 928 | 1131 | 1276 | 1612 | 2305 | 1612 |
| Note: (74) Same as (26) in Table 5-1. | | | | | | | |

As is clear from Table 23, the thermally demagnetized MnZn soft ferrite magnetic cores of Examples 53-55 all had a maximum core loss Pcv$_{max}$ of 3800 kW/m³ or less at 20-100°C at a frequency of 1 MHz and an exciting magnetic flux density of 100 mT, demonstrating low core loss over a wide temperature range.

**Claims**

1. MnZn soft ferrite comprising main components consisting of 54.0-55.5% by mol of Fe (calculated as $Fe_2O_3$), and 3-7% by mol of Zn (calculated as ZnO), the balance being Mn (calculated as MnO), and a sub-component including 0.25-0.7% by mass of Co (calculated as $Co_3O_4$) in outer percentage to 100% by mass in total of the main components (calculated as the oxides), a ratio ($ZnO/Fe_2O_3$ molar ratio) of a Zn content (% by mol calculated as ZnO) to a Fe content (% by mol calculated as $Fe_2O_3$) in the main components being 0.0541-0.127, a ratio ($Co_3O_4/Fe_2O_3$ ratio) of a Co content (% by mass calculated as $Co_3O_4$ per 100% by mass in total of the main components) in the sub-component to the Fe content (% by mol calculated as $Fe_2O_3$) in the main components being 0.00450-0.0130, and a ratio [$(Co_3O_4)^2$/ZnO ratio] of a square of the Co content (% by mass calculated as $Co_3O_4$ per 100% by mass in total of the main components) in the sub-component to the Zn content (% by mol calculated as ZnO) in the main components being 0.0135-0.112.

2. The MnZn soft ferrite according to claim 1, having a sintered body density of 4.65 g/cm³ or more.

3. The MnZn soft ferrite according to claim 1, having an average crystal grain size of 2-5 μm.

4. The MnZn soft ferrite according to claim 1, wherein maximum core loss Pcv$_{max}$ at 20-100°C at a frequency of 2 MHz and an exciting magnetic flux density of 75 mT is 3800 kW/m³ or less.

5. The MnZn soft ferrite according to claim 1, wherein maximum core loss Pcv$_{max}$ at 20-100°C at a frequency of 1 MHz and an exciting magnetic flux density of 100 mT is 3800 kW/m³ or less.

6. The MnZn soft ferrite according to claim 5, wherein the maximum core loss Pcv$_{max}$ at 20-100°C at a frequency of 1 MHz and an exciting magnetic flux density of 100 mT is 2000 kW/m³ or less.

7. The MnZn soft ferrite according to any one of claims 1-5, having initial permeability μi of 400 or more.

8. A method for producing the MnZn soft ferrite according to any one of claims 1-6, comprising: a step of molding a raw material powder to obtain a green body; a step of sintering the green body; and a step of heat-treating the resultant sintered body;

the sintering step comprising a high-temperature-keeping step in which the sintering step is performed in an atmosphere having an oxygen concentration of more than 0.05% by volume and 10% by volume or less, and at a temperature of more than 1055°C and 1205°C or less for 1-12 hours,

the heat treatment step including keeping the sintered body at a temperature that meets the conditions of (Tc - 100°C) to (Tc - 10°C) (where Tc is a Curie temperature measured using a method described in JIS C2560-2) for 1 hour or more, and then lowering the temperature from the keeping temperature at a cooling speed of 100-200°C/hr or at a cooling speed of 50°C/hr or less.

9. A method for producing the MnZn soft ferrite according to any one of claims 1-6, comprising: a step of molding a raw material powder to obtain a green body; and a step of sintering the green body;

the sintering step comprising a high-temperature-keeping step in which the sintering step is performed in an atmosphere having an oxygen concentration of more than 0.05% by volume and 10% by volume or less, and at a temperature of more than 1055°C and 1205°C or less for 1-12 hours,

wherein a heat treatment is not performed after the sintering step.

# Fig. 1

# Fig. 2

Fig. 3

## INTERNATIONAL SEARCH REPORT

| International application No. |
| --- |
| **PCT/JP2024/022450** |

| A. | CLASSIFICATION OF SUBJECT MATTER |
| --- | --- |

*H01F 1/34*(2006.01)i; *C01G 49/00*(2006.01)i; *C04B 35/38*(2006.01)i
FI:  H01F1/34 140; C01G49/00 B; C04B35/38

According to International Patent Classification (IPC) or to both national classification and IPC

| B. | FIELDS SEARCHED |
| --- | --- |

Minimum documentation searched (classification system followed by classification symbols)

H01F1/34; C01G49/00; C04B35/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2007-269502 A (TDK CORPORATION) 18 October 2007 (2007-10-18) paragraphs [0001], [0014]-[0034] | 1-9 |
| X | JP 2007-238339 A (TDK CORPORATION) 20 September 2007 (2007-09-20) paragraphs [0001], [0015]-[0027], [0039]-[0041] | 1-9 |
| X | JP 2008-169072 A (NIPPON CERAMIC KK) 24 July 2008 (2008-07-24) paragraphs [0001], [0006]-[0007], [0010]-[0013] | 1-9 |
| A | WO 2017/164351 A1 (HITACHI METALS LTD.) 28 September 2017 (2017-09-28) paragraphs [0023]-[0109] | 1-9 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 August 2024** | **10 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/022450**

| Patent document<br>cited in search report | | | Publication date<br>(day/month/year) | Patent family member(s) | | | Publication date<br>(day/month/year) |
|---|---|---|---|---|---|---|---|
| JP | 2007-269502 | A | 18 October 2007 | US<br>paragraphs [0002], [0029]-<br>[0065]<br>CN | 2007/0228319<br><br><br>101051545 | A1<br><br><br>A | |
| JP | 2007-238339 | A | 20 September 2007 | US<br>paragraphs [0002], [0035]-<br>[0057], [0074]-[0076]<br>CN | 2007/0205390<br><br><br>101055784 | A1<br><br><br>A | |
| JP | 2008-169072 | A | 24 July 2008 | (Family: none) | | | |
| WO | 2017/164351 | A1 | 28 September 2017 | US<br>paragraphs [0030]-[0114]<br>EP<br>CN<br>TW | 2019/0096554<br><br>3441996<br>108885938<br>201737269 | A1<br><br>A1<br>A<br>A | |

Form PCT/ISA/210 (patent family annex) (July 2022)

34

**REFERENCES CITED IN THE DESCRIPTION**

**Patent documents cited in the description**

- WO 2017164351 A1
- JP 2009227554 A
- WO 2016032001 A1
- JP 2007070209 A